# EUROPEAN PATENT SPECIFICATION

(11) **EP 4 044 333 B1**
(45) Date of publication and mention of the grant of the patent: **25.03.2026**
(21) Application number: 22151712.1
(22) Date of filing: 17.01.2022
(51) Int. Cl.: H01M 50/183, H01M 50/209, H01M 50/474, H01M 50/502, H01M 50/555, H01M 50/627, H01M 10/04

(54) **BATTERY**
BATTERIE
BATTERIE

(30) Priority: 16.02.2021 JP 2021022383
(43) Date of publication of application: 17.08.2022
(73) Proprietor: Prime Planet Energy & Solutions, Inc., Tokyo 103-0022 (JP)
(72) Inventor: MIYAMURA, Yukinobu, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(56) References cited:
- JP-A- 2013 080 563
- US-A1- 2012 052 360

## Description

### BACKGROUND OF THE INVENTION

### Field of the Invention

The present technology relates to a battery.

### Description of the Background Art

Japanese Patent No. JP 5811456 B2 is a prior art document that discloses a configuration of an electric storage device. The electric storage device described in JP 5811456 B2 includes an electrode assembly and an insulating cover. The insulating cover is formed by folding an insulating sheet body and covers the electrode assembly. The sheet body includes a first section, a pair of second sections, and a pair of third sections. The first section forms a bottom surface part. The pair of second sections form a pair of principal surface parts that project from a pair of opposed end edges of the first section. The pair of third sections form a pair of edge surface parts that project from a pair of opposed side edges of the second sections. Each of the pair of edge surface parts includes a piece of the third section projecting from one of the pair of second sections and another piece of the third section projecting from the other of the pair of second sections. The piece of the third section projecting from one of the pair of second sections and the piece of the third section projecting from the other of the pair of second sections overlap each other and are joined together. Metal foils projecting at the lateral ends of the electrode assembly are electrically connected to respective current collectors. Portions of the overlapping third sections on the open end side are heat-sealed together while using an intermediate part of the current collector as a pad.

Further, patent document JP 2013 080 563 A discloses a laminate-type secondary battery which comprises a laminate-type electrode where a plurality of positive electrode plates each having a positive electrode collector lead extending therefrom, and a plurality of negative electrode plates each having a negative electrode collector lead extending therefrom are laminated alternately with a separator interposed therebetween. In a first separator located on one surface of the positive electrode plate, a first insulating adhesive tape is stuck to a region facing the positive electrode collector lead. In a second separator located on the other surface of the positive electrode plate, a second insulating adhesive tape is stuck to a region facing the positive electrode collector lead.

In addition, patent document US 2012/052360 A1 discloses that stacked positive and negative electrode current collector tabs are bundled respectively in such a manner as to be gathered at one stacking direction-wise side (the upper end side) of the stacked electrode assembly. Portions of the bundled tabs extending from the bundled portion toward a tip side of the bundled tabs are bent toward the other stacking direction-wise side (lower end side) of the stacked electrode assembly, to form bent portions. The stacked electrode assembly is covered and fixed by an insulating sheet having insulation capability so as to cover both stacking direction-wise end faces thereof and surround the stacked electrode assembly in a tubular shape. A portion (slip-in piece) of the insulating sheet is inserted between the stacked electrode assembly and the bent portions of the positive and negative electrode current collector tabs. A portion (outer cover piece) of the insulating sheet covers the bent portions of the positive and negative electrode current collector tabs from outside.

### SUMMARY OF THE INVENTION

In the electric storage device described in JP 5811456 B2, when joining the overlapping portions of the insulating sheet to each other, a load may be applied to a tab portion constituted of each of the metal foils projecting at the lateral ends of the electrode assembly and to the joined portion between the tab portion and the current collector, thus resulting in decreased reliability of the battery.

The present technology has been made to solve the above-described problem, and has an object to provide a battery having improved reliability by suppressing a load from being applied to a tab portion and a joined portion between the tab portion and a current collector when joining overlapping portions of an insulating sheet to each other.

The above-mentioned object is solved by the subject-matter of claim 1. Further advantageous configurations of the invention can be drawn from the dependent claims.

A battery according to the present technology includes an electrode assembly, a battery case, a tab portion, a current collector, and an insulating sheet. The electrode assembly has a positive electrode plate and a negative electrode plate. The battery case accommodates the electrode assembly. The tab portion is provided on at least one of the positive electrode plate and the negative electrode plate, and extends on a side of the electrode assembly. The current collector is connected to the tab portion. The insulating sheet is disposed between the electrode assembly and the battery case and has a fold-over portion between the battery case and the current collector. The current collector faces a side surface of the battery case with the tab portion being folded. A joined portion at which portions of the insulating sheet are joined to each other is formed in the fold-over portion.

The foregoing and other objects, features, aspects and advantages of the present invention will become more apparent from the following detailed description of the present invention when taken in conjunction with the accompanying drawings.

The invention is defined in the accompanying claims.

### BRIEF DESCRIPTION OF THE DRAWINGS

Fig. 1 is a perspective view showing a configuration of a battery according to a first embodiment of the present technology.
Fig. 2 is a cross sectional view of the battery of Fig. 1 when viewed in a direction of arrowed line II-II.
Fig. 3 is a perspective view showing an inner configuration of the battery according to the first embodiment of the present technology except for an exterior package and an insulating sheet included in the battery.
Fig. 4 is a front view showing a positive electrode raw sheet before forming a positive electrode plate included in the battery according to the first embodiment of the present technology.
Fig. 5 is a cross sectional view of the positive electrode raw sheet of Fig. 4 when viewed in a direction of arrowed line V-V.
Fig. 6 is a front view showing a state after forming the positive electrode plate included in the battery according to the first embodiment of the present technology.
Fig. 7 is a front view showing a negative electrode raw sheet before forming a negative electrode plate included in the battery according to the first embodiment of the present technology.
Fig. 8 is a cross sectional view of the negative electrode raw sheet of Fig. 7 when viewed in a direction of arrowed line VIII-VIII.
Fig. 9 is a front view showing a state after forming the negative electrode plate included in the battery according to the first embodiment of the present technology.
Fig. 10 is a perspective view showing configurations of an electrode assembly and a current collector included in the battery according to the first embodiment of the present technology.
Fig. 11 is a cross sectional view of the electrode assembly and the current collector of Fig. 10 when viewed in a direction of arrowed line XI-XI.
Fig. 12 is a cross sectional view showing a state in which a tab portion of the electrode assembly included in the battery according to the first embodiment of the present technology is folded.
Fig. 13 is an upper perspective view showing configurations of a portion of the current collector and a sealing plate included in the battery according to the first embodiment of the present technology.
Fig. 14 is a lower perspective view showing the configurations of the portion of the current collector and the sealing plate included in the battery according to the first embodiment of the present technology.
Fig. 15 is an enlarged cross sectional view showing an XV portion of the battery shown in Fig. 2.
Fig. 16 is an enlarged cross sectional view showing an XVI portion of the battery shown in Fig. 2.
Fig. 17 is a perspective view showing a positional relation between a battery case and an insulating sheet included in the battery according to the first embodiment of the present technology.
Fig. 18 is a perspective view showing the configuration of the battery except for the exterior package included in the battery according to the first embodiment of the present technology.
Fig. 19 is a side view of the battery of Fig. 18 when viewed in a direction of arrow XIX.
Fig. 20 is a side view of the battery of Fig. 18 when viewed in a direction of arrow XX.
Fig. 21 is a cross sectional view of the battery of Fig. 18 when viewed in a direction of arrowed line XXI-XXI.
Fig. 22 is a cross sectional view showing a state in which a joined portion is formed at the insulating sheet included in the battery according to the first embodiment of the present technology.
Fig. 23 is an expanded view showing the configuration of the insulating sheet included in the battery according to the first embodiment of the present technology.
Fig. 24 is a perspective view showing a state in which the insulating sheet included in the battery according to the first embodiment of the present technology is folded.
Fig. 25 is an expanded view showing a configuration of an insulating sheet included in a battery according to a second embodiment of the present technology.
Fig. 26 is a side view showing a configuration of a battery according to a third embodiment of the present technology.
Fig. 27 is a cross sectional view showing a joined portion of an insulating sheet included in a battery according to a fourth embodiment of the present technology.
Fig. 28 is a cross sectional view showing a joined portion of an insulating sheet included in a battery according to a first modification of the fourth embodiment of the present technology.
Fig. 29 is a cross sectional view showing a joined portion of an insulating sheet included in a battery according to a second modification of the fourth embodiment of the present technology.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly.

It should be noted that in the present specification, the terms "comprise", "include", and "have" are open-end terms. That is, when a certain configuration is included, a configuration other than the foregoing configuration may or may not be included. Further, the present technology is not limited to one that necessarily exhibits all the functions and effects stated in the present embodiment.

In the present specification, the term "battery" is not limited to a lithium ion battery, and may include another battery such as a nickel-metal hydride battery. In the present specification, the term "electrode" may collectively represent a positive electrode and a negative electrode. Further, the term "electrode plate" may collectively represent a positive electrode plate and a negative electrode plate.

In the present specification, the "power storage cell" or the "power storage module" is not limited to a battery cell or a battery module, and may include a capacitor cell or a capacitor module.

### (First Embodiment)

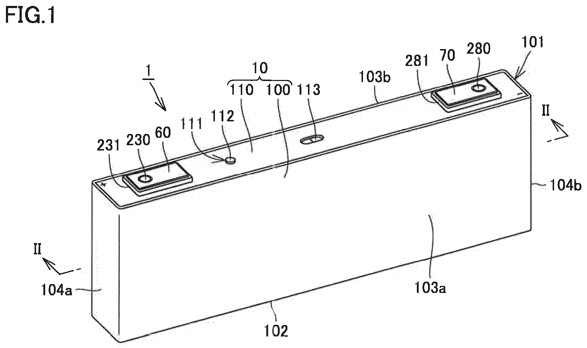

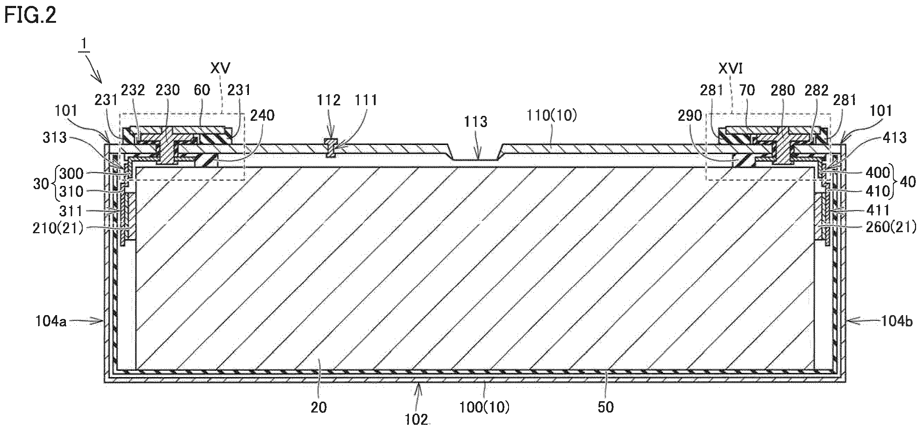

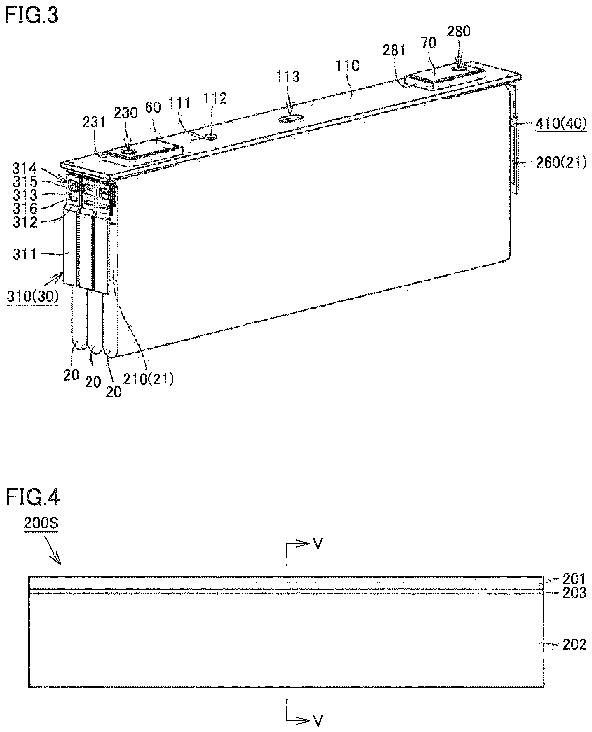

Fig. 1 is a perspective view showing a configuration of a battery according to a first embodiment of the present technology. Fig. 2 is a cross sectional view of the battery of Fig. 1 when viewed in a direction of arrowed line II-II. Fig. 3 is a perspective view showing an inner configuration of the battery according to the first embodiment of the present technology except for an exterior package and an insulating sheet included in the battery.

As shown in Figs. 1 to 3, battery 1 includes a battery case 10, electrode assemblies 20, a positive electrode current collector 30, a negative electrode current collector 40, an insulating sheet 50, a positive electrode external conductive member 60, and a negative electrode external conductive member 70. Battery case 10 includes an exterior package 100 and a sealing plate 110.

Exterior package 100 has a prismatic shape having a bottom and is provided with an opening 101. Exterior package 100 is composed of a metal. Specifically, exterior package 100 is composed of aluminum, an aluminum alloy, iron, an iron alloy, or the like.

Exterior package 100 has a bottom portion 102, a pair of first side walls 103a, 103b, and a pair of second side walls 104a, 104b.

Bottom portion 102 faces opening 101. The pair of first side walls 103a, 103b are provided to extend from edges of bottom portion 102 and face each other in parallel. The pair of second side walls 104a, 104b are provided to extend from edges of bottom portion 102 and face each other in parallel. Each of the pair of second side walls 104a, 104b connects between first side walls 103a, 103b. The area of each of the pair of first side walls 103a, 103b is larger than the area of each of the pair of second side walls 104a, 104b.

Sealing plate 110 seals opening 101 of exterior package 100. Sealing plate 110 is composed of, for example, aluminum, an aluminum alloy, iron, an iron alloy, or the like.

Sealing plate 110 is provided with an electrolyte solution injection hole 111. Electrolyte solution injection hole 111 is sealed by a sealing member 112. Sealing plate 110 is provided with a gas discharge valve 113 that is fractured to discharge gas inside battery case 10 to the outside, when pressure inside battery case 10 becomes more than or equal to a predetermined value.

Each of electrode assemblies 20 in the present embodiment is an electrode assembly having a flat shape and has a positive electrode plate and a negative electrode plate, which will be described later. Specifically, electrode assembly 20 is a wound type electrode assembly in which a strip-shaped positive electrode plate and a strip-shaped negative electrode plate are wound with a strip-shaped separator (not shown) being interposed therebetween.

As shown in Figs. 2 and 3, battery case 10 stores electrode assemblies 20. Specifically, the plurality of wound type electrode assemblies are accommodated together with an electrolyte solution (not shown) inside insulating sheet 50 disposed in battery case 10. Battery case 10 according to the present embodiment accommodates three wound type electrode assemblies. Each of electrode assemblies 20 is accommodated in exterior package 100 with electrode assembly 20 being oriented in a direction in which the winding axis of electrode assembly 20 is parallel to bottom portion 102. It should be noted that the number of electrode assemblies 20 disposed in exterior package 100 is not limited to three. Further, electrode assembly 20 is not limited to the wound type electrode assembly, and may be a stacked type electrode assembly in which a plurality of positive electrode plates and a plurality of negative electrode plates are alternately stacked.

In electrode assembly 20, a tab portion 21 is provided on at least one of the positive electrode plate and the negative electrode plate, and extends on a side of electrode assembly 20. In electrode assembly 20 in the present embodiment, a positive electrode tab group 210 including a plurality of positive electrode tab portions is provided as one tab portion 21 at one end portion of electrode assembly 20 in the direction in which the winding axis of electrode assembly 20 extends. At the other end portion of electrode assembly 20 in the direction in which the winding axis of electrode assembly 20 extends, a negative electrode tab group 260 including a plurality of negative electrode tabs is provided as other tab portion 21.

Preferably, electrode assembly 20 is disposed in exterior package 100 with insulating sheet 50 interposed therebetween and is oriented such that one second side wall 104a faces positive electrode tab group 210 and other second side wall 104b faces negative electrode tab group 260.

As shown in Figs. 1 to 3, a positive electrode terminal 230 and a negative electrode terminal 280 are attached to sealing plate 110. Specifically, as shown in Figs. 2 and 3, positive electrode terminal 230 is electrically connected to positive electrode tab group 210 in each of the plurality of electrode assemblies 20 via positive electrode current collector 30. Positive electrode external conductive member 60 is connected to positive electrode terminal 230. It should be noted that battery 1 does not need to necessarily include positive electrode external conductive member 60.

Each of positive electrode terminal 230 and positive electrode external conductive member 60 is preferably composed of a metal, and is more preferably composed of aluminum or an aluminum alloy.

Negative electrode terminal 280 is electrically connected to negative electrode tab group 260 in each of the plurality of electrode assemblies 20 via negative electrode current collector 40. Negative electrode external conductive member 70 is connected to negative electrode terminal 280. It should be noted that battery 1 does not need to necessarily include negative electrode external conductive member 70.

Negative electrode terminal 280 is preferably composed of a metal, and is more preferably composed of copper or a copper alloy. Negative electrode external conductive member 70 is preferably composed of a metal, and is more preferably composed of aluminum or an aluminum alloy. It should be noted that negative electrode terminal 280 may have a region that is connected to negative electrode current collector 40 and that is composed of copper or a copper alloy, and a region that protrudes outward from sealing plate 110 and that is composed of aluminum or an aluminum alloy.

Positive electrode current collector 30 has a plate-like shape. Positive electrode current collector 30 is connected to one tab portion 21. Positive electrode current collector 30 in the present embodiment is connected to positive electrode tab group 210. Positive electrode current collector 30 is preferably composed of a metal, and is more preferably composed of aluminum or an aluminum alloy.

Positive electrode current collector 30 in the present embodiment includes: a first positive electrode current collector 300 serving as an extension current collector; and a second positive electrode current collector 310 serving as a current collector.

First positive electrode current collector 300 is connected to positive electrode terminal 230 between electrode assembly 20 and sealing plate 110. First positive electrode current collector 300 is connected to second positive electrode current collector 310 at its end portion on the side opposite to the side on which positive electrode terminal 230 is connected. Second positive electrode current collector 310 is connected to positive electrode tab group 210 on the side opposite to the side on which first positive electrode current collector 300 is connected. It should be noted that positive electrode current collector 30 may be constituted of one component.

Negative electrode current collector 40 has a plate-like shape. Negative electrode current collector 40 is connected to other tab portion 21. Negative electrode current collector 40 in the present embodiment is connected to negative electrode tab group 260. Negative electrode current collector 40 is preferably composed of a metal, and is more preferably composed of copper or a copper alloy.

Negative electrode current collector 40 in the present embodiment includes: a first negative electrode current collector 400 serving as an extension current collector; and a second negative electrode current collector 410 serving as a current collector. First negative electrode current collector 400 is connected to negative electrode terminal 280 between electrode assembly 20 and sealing plate 110. First negative electrode current collector 400 is connected to second negative electrode current collector 410 at its end portion on the side opposite to the side on which negative electrode terminal 280 is connected. Second negative electrode current collector 410 is connected to negative electrode tab group 260 on the side opposite to the side on which first negative electrode current collector 400 is connected. It should be noted that negative electrode current collector 40 may be constituted of one component.

As shown in Fig. 2, insulating sheet 50 is disposed between electrode assembly 20 and battery case 10. Insulating sheet 50 is preferably a sheet composed of a resin. The material of insulating sheet 50 is preferably polypropylene (PP), polyethylene terephthalate (PET), polyphenylene sulfide (PPS), polyimide (PI), or polyolefin (PO), for example. In particular, PP is preferable as the material of insulating sheet 50.

The melting point of insulating sheet 50 is preferably more than or equal to 100°C and less than or equal to 400°C, is more preferably more than or equal to 120°C and less than or equal to 300°C, and is particularly preferably more than or equal to 150°C and less than or equal to 170°C.

The thickness of insulating sheet 50 is preferably more than or equal to 0.03 mm and less than or equal to 1 mm, is more preferably more than or equal to 0.05 mm and less than or equal to 0.3 mm, and is particularly preferably more than or equal to 0.1 mm and less than or equal to 0.2 mm.

Hereinafter, details of each component of battery 1 and a method of manufacturing battery 1 will be described. First, the positive electrode plate will be described.

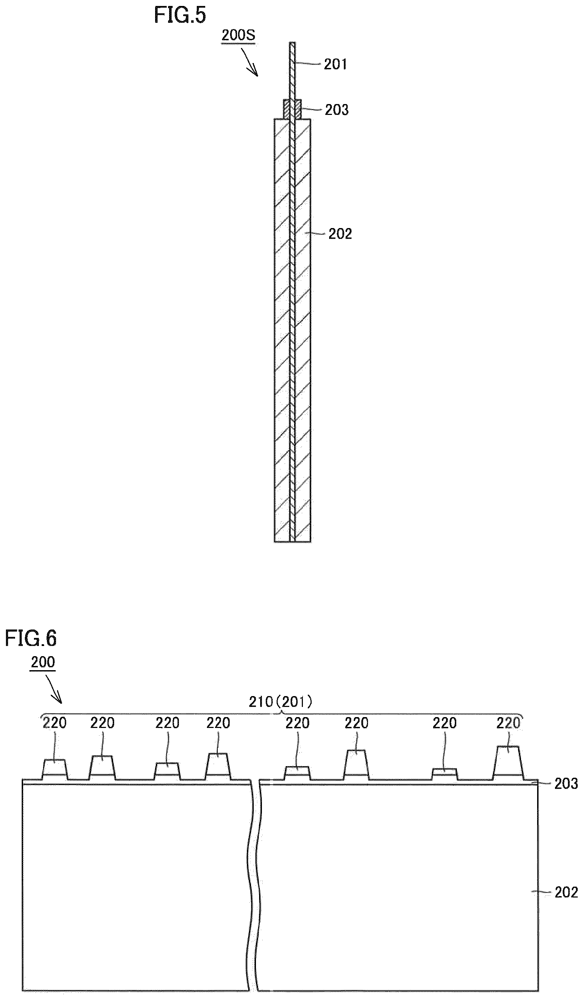

Fig. 4 is a front view showing a positive electrode raw sheet before forming the positive electrode plate included in the battery according to the first embodiment of the present technology. Fig. 5 is a cross sectional view of the positive electrode raw sheet of Fig. 4 when viewed in a direction of arrowed line V-V. Fig. 6 is a front view showing a state after forming the positive electrode plate included in the battery according to the first embodiment of the present technology.

The positive electrode plate is manufactured by processing a positive electrode raw sheet 200S. As shown in Figs. 4 and 5, positive electrode raw sheet 200S includes a positive electrode core body 201, a positive electrode active material layer 202, and a positive electrode protection layer 203. Positive electrode core body 201 is an aluminum foil or an aluminum alloy foil.

Positive electrode active material layer 202 is formed on positive electrode core body 201 except for end portions of both surfaces of positive electrode core body 201 on one side. Positive electrode active material layer 202 is formed on positive electrode core body 201 by applying a positive electrode active material layer slurry using a die coater.

The positive electrode active material layer slurry is produced by kneading lithium nickel cobalt manganese composite oxide, polyvinylidene difluoride (PVdF), a carbon material, and N-methyl-2-pyrrolidone (NMP) to attain the following mass ratio: the lithium nickel cobalt manganese composite oxide : the PVdF: the carbon material = 97.5 : 1 : 1.5. The lithium nickel cobalt manganese composite oxide serves as a positive electrode active material, the polyvinylidene difluoride (PVdF) serves as a binder, the carbon material serves as a conductive material, and the N-methyl-2-pyrrolidone (NMP) serves as a dispersion medium.

Positive electrode protection layer 203 is formed at one end portion of positive electrode active material layer 202 in the width direction and is in contact with positive electrode core body 201. Positive electrode protection layer 203 is formed on positive electrode core body 201 by applying a positive electrode protection layer slurry using a die coater.

The positive electrode protection layer slurry is produced by kneading alumina powder, a carbon material, PVdF, and NMP to attain the following mass ratio: the alumina powder : the carbon material : the PVdF = 83 : 3 : 14. The carbon material serves as a conductive material, the PVdF serves as a binder, and the NMP serves as a dispersion medium.

Positive electrode core body 201 having the positive electrode active material layer slurry and the positive electrode protection layer slurry applied thereon is dried to remove the NMP included in each of the positive electrode active material layer slurry and the positive electrode protection layer slurry. Thus, positive electrode active material layer 202 and positive electrode protection layer 203 are formed. Further, positive electrode active material layer 202 is compressed, thereby forming positive electrode raw sheet 200S including positive electrode core body 201, positive electrode active material layer 202, and positive electrode protection layer 203. Positive electrode raw sheet 200S is cut into a predetermined shape to form the positive electrode plate. It should be noted that positive electrode raw sheet 200S can be cut by laser processing involving irradiation of energy rays, die machining, cutter machining, or the like.

As shown in Fig. 6, a plurality of positive electrode tabs 220 each constituted of positive electrode core body 201 are provided at one end portion of positive electrode plate 200, which is formed from positive electrode raw sheet 200S, in the width direction. In consideration of a state in which the plurality of positive electrode tabs 220 are stacked and connected to positive electrode current collector 30 as positive electrode tab group 210, the lengths or widths of the plurality of positive electrode tabs 220 in the protruding direction are appropriately adjusted in accordance with respective positions at which the plurality of positive electrode tabs 220 are formed.

Positive electrode protection layer 203 is provided at the root of each of the plurality of positive electrode tabs 220. It should be noted that positive electrode tab group 210 may not be provided with positive electrode protection layer 203.

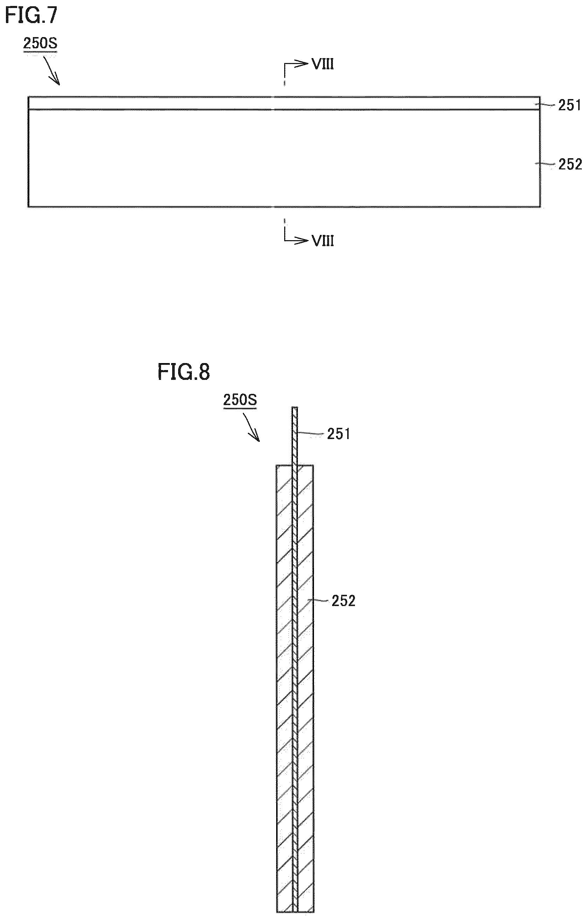

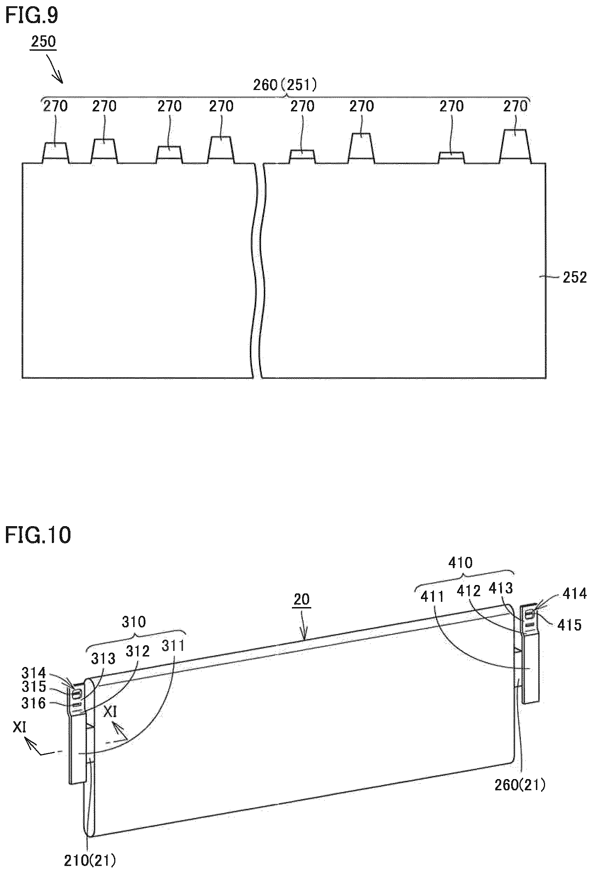

Next, the negative electrode plate will be described. Fig. 7 is a front view showing a negative electrode raw sheet before forming the negative electrode plate included in the battery according to the first embodiment of the present technology. Fig. 8 is a cross sectional view of the negative electrode raw sheet of Fig. 7 when viewed in a direction of arrowed line VIII-VIII. Fig. 9 is a front view showing a state after forming the negative electrode plate included in the battery according to the first embodiment of the present technology.

The negative electrode plate is manufactured by processing a negative electrode raw sheet 250S. As shown in Figs. 7 and 8, negative electrode raw sheet 250S includes a negative electrode core body 251 and a negative electrode active material layer 252. Negative electrode core body 251 is a copper foil or a copper alloy foil.

Negative electrode active material layer 252 is formed on negative electrode core body 251 except for end portions of both surfaces of negative electrode core body 251 on one side. Negative electrode active material layer 252 is formed by applying a negative electrode active material layer slurry using a die coater.

The negative electrode active material layer slurry is produced by kneading graphite, styrene-butadiene rubber (SBR), carboxymethyl cellulose (CMC), and water to attain the following mass ratio: the graphite : the SBR : the CMC = 98 : 1 : 1. The graphite serves as a negative electrode active material, the styrene-butadiene rubber (SBR) and the carboxymethyl cellulose (CMC) serve as a binder, and the water serves as a dispersion medium.

Negative electrode core body 251 having the negative electrode active material layer slurry applied thereon is dried to remove the water included in the negative electrode active material layer slurry. Thus, negative electrode active material layer 252 is formed. Further, negative electrode active material layer 252 is compressed, thereby forming negative electrode raw sheet 250S including negative electrode core body 251 and negative electrode active material layer 252. Negative electrode raw sheet 250S is cut into a predetermined shape to form the negative electrode plate. It should be noted that negative electrode raw sheet 250S can be cut by laser processing involving irradiation of energy rays, die machining, cutter machining, or the like.

As shown in Fig. 9, a plurality of negative electrode tabs 270 each constituted of negative electrode core body 251 are provided at one end portion of negative electrode plate 250, which is formed from negative electrode raw sheet 250S, in the width direction. In consideration of a state in which the plurality of negative electrode tabs 270 are stacked and connected to negative electrode current collector 40 as negative electrode tab group 260, the lengths or widths of the plurality of negative electrode tabs 270 in the protruding direction are appropriately adjusted in accordance with respective positions at which the plurality of negative electrode tabs 270 are formed.

Next, electrode assembly 20, positive electrode current collector 30, and negative electrode current collector 40 will be described. Fig. 10 is a perspective view showing configurations of the electrode assembly and the current collector included in the battery according to the first embodiment of the present technology. Fig. 10 shows a state before tab portion 21 is folded.

As shown in Fig. 10, strip-shaped positive electrode plate 200 and strip-shaped negative electrode plate 250 produced by the above-described method are wound with the strip-shaped separator (not shown) being interposed therebetween, thereby producing electrode assembly 20 having a flat shape. The separator is preferably a separator in which a heat-resistant layer is provided on a surface of a substrate composed of polyolefin. The heat-resistant layer includes ceramic particles and a binder. Examples of the ceramic particles usable herein include aluminum oxide, boehmite, aluminum hydroxide, titania, or the like.

Positive electrode tab group 210 including the plurality of positive electrode tabs 220 provided on positive electrode plate 200 is disposed at an end portion of one side of electrode assembly 20 in the direction in which the winding axis of electrode assembly 20 extends.

The thickness of each positive electrode tab 220 is preferably more than or equal to 5 µm and less than or equal to 30 µm, and is more preferably more than or equal to 8 µm and less than or equal to 20 µm. The number of stacked positive electrode tabs 220 in positive electrode tab group 210 is preferably more than or equal to 10, is more preferably more than or equal to 20, and is particularly preferably more than or equal to 30.

Negative electrode tab group 260 including the plurality of negative electrode tabs 270 provided on negative electrode plate 250 is disposed at an end portion of the other side of electrode assembly 20 in the direction in which the winding axis of electrode assembly 20 extends. Thus, tab portion 21 is constituted of at least one of positive electrode tab group 210 and negative electrode tab group 260. Tab portion 21 in the present embodiment is constituted of positive electrode tab group 210 and negative electrode tab group 260.

The thickness of negative electrode tab 270 is preferably more than or equal to 5 µm and less than or equal to 30 µm, and is more preferably more than or equal to 8 µm and less than or equal to 20 µm. The number of stacked negative electrode tabs 270 in negative electrode tab group 260 is preferably more than or equal to 10, is more preferably more than or equal to 20, and is particularly preferably more than or equal to 30.

Second positive electrode current collector 310 includes a first region 311, a second region 312, and a third region 313. As shown in Fig. 2, first region 311 faces one second side wall 104a. Tab portion 21 is connected to first region 311.

As shown in Figs. 2 and 10, second region 312 is located on the sealing plate 110 side with respect to first region 311. Second region 312 is inclined with respect to both first region 311 and third region 313.

Third region 313 is located on the sealing plate 110 side with respect to second region 312 and faces one second side wall 104a. Third region 313 is connected to first positive electrode current collector 300.

As shown in Fig. 2, each of first region 311 and third region 313 is disposed such that a flat portion thereof is substantially perpendicular to the winding axis of electrode assembly 20. The shortest distance between first region 311 of second positive electrode current collector 310 and one second side wall 104a is shorter than the shortest distance between third region 313 of second positive electrode current collector 310 and one second side wall 104a in the direction orthogonal to one second side wall 104a, second positive electrode current collector 310 and one second side wall 104a facing each other.

As shown in Fig. 10, a recess 314 is provided in third region 313. The portion provided with recess 314 has a thickness thinner than those of the surroundings of the portion provided with recess 314. Recess 314 is provided with a through hole 315. In recess 314, third region 313 is joined to first positive electrode current collector 300. A fuse hole 316 can be provided in second positive electrode current collector 310.

As with second positive electrode current collector 310, second negative electrode current collector 410 includes a first region 411, a second region 412, and a third region 413. A recess 414 and a through hole 415 are provided in third region 413. In recess 414, third region 413 is joined to first negative electrode current collector 400.

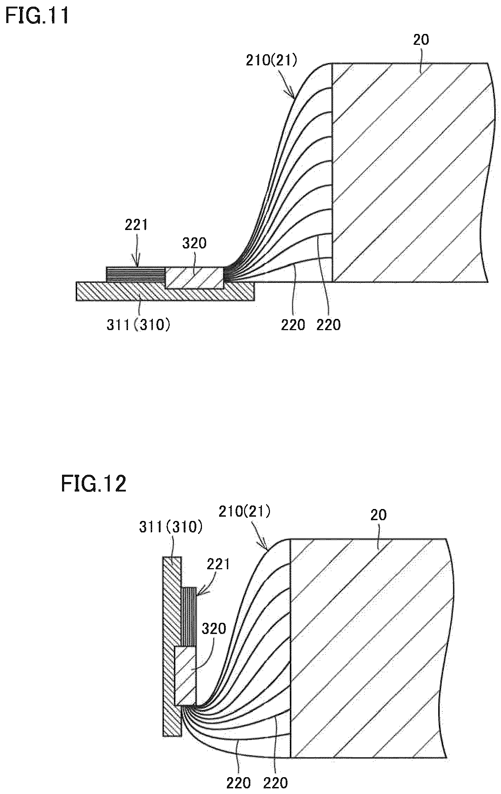

Next, connection between the current collector and tab portion 21 will be described. Fig. 11 is a cross sectional view of the electrode assembly and the current collector of Fig. 10 when viewed in a direction of arrowed line XI-XI. Fig. 12 is a cross sectional view showing a state in which the tab portion of the electrode assembly included in the battery according to the first embodiment of the present technology is folded.

As shown in Fig. 11, first region 311 and positive electrode tab group 210 are joined to each other in a state in which tip portion 221 of positive electrode tab group 210 including the plurality of positive electrode tabs 220 is located adjacent to first region 311 of second positive electrode current collector 310. By this joining, a tab-joined portion 320 is formed. As a method of joining first region 311 and positive electrode tab group 210 to each other, ultrasonic welding, resistance welding, laser welding, or the like can be used.

As shown in Fig. 12, positive electrode tab group 210 having tab-joined portion 320 formed therein is folded and is therefore bent. Tip portion 221 folded in tab portion 21 faces at least one of the pair of second side walls 104a, 104b. In the present embodiment, tip portion 221 faces one second side wall 104a. Thus, second positive electrode current collector 310 faces the side surface of battery case 10 with positive electrode tab group 210 being folded. It should be noted that tab-joined portion 320 may be joined to a surface of first region 311 opposite to the electrode assembly 20 side.

As with positive electrode tab group 210, first region 411 and negative electrode tab group 260 are joined to each other in a state in which negative electrode tab group 260 is located adjacent to first region 411 of second negative electrode current collector 410. By this joining, a tab-joined portion is formed. Negative electrode tab group 260 having the tab-joined portion formed therein is folded and is therefore bent. The tip portion folded in tab portion 21 faces at least one of the pair of second side walls 104a, 104b. In the present embodiment, the tip portion faces other second side wall 104b. Thus, second negative electrode current collector 410 faces other second side wall 104b with negative electrode tab group 260 being folded.

In first region 311 of second positive electrode current collector 310, tab-joined portion 320 is preferably disposed close to the root side of positive electrode tab group 210. With this configuration, when positive electrode tab group 210 is folded, the bent shape can be stably formed in the vicinity of the root of positive electrode tab group 210. The same as in the case of second positive electrode current collector 310 applies to the position to which negative electrode tab group 260 is joined in first region 411 of second negative electrode current collector 410.

As shown in Fig. 2, the end portion of second positive electrode current collector 310 on the bottom portion 102 side of exterior package 100 is preferably located on the bottom portion 102 side with respect to the end portion of positive electrode tab group 210 on the bottom portion 102 side of exterior package 100. With this configuration, positive electrode tab group 210 can be stably folded in the step of folding positive electrode tab group 210. The same as in the case of second positive electrode current collector 310 applies to the lower end portion of second negative electrode current collector 410.

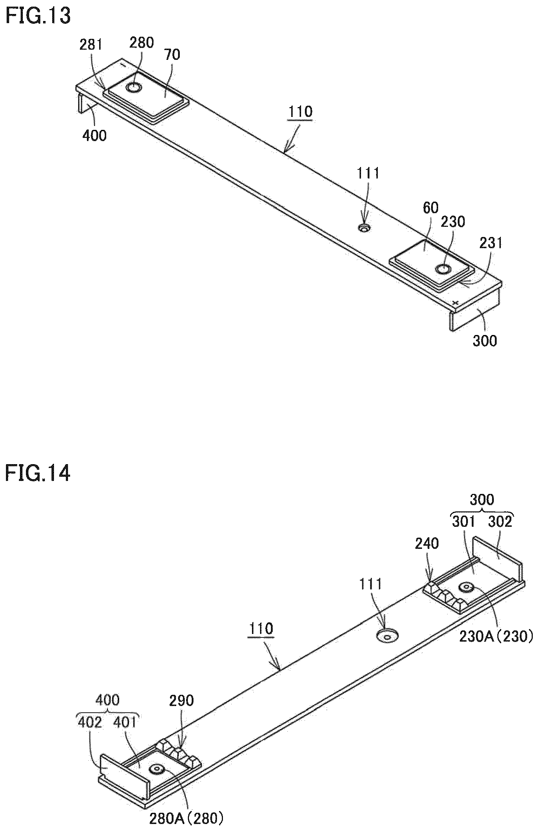

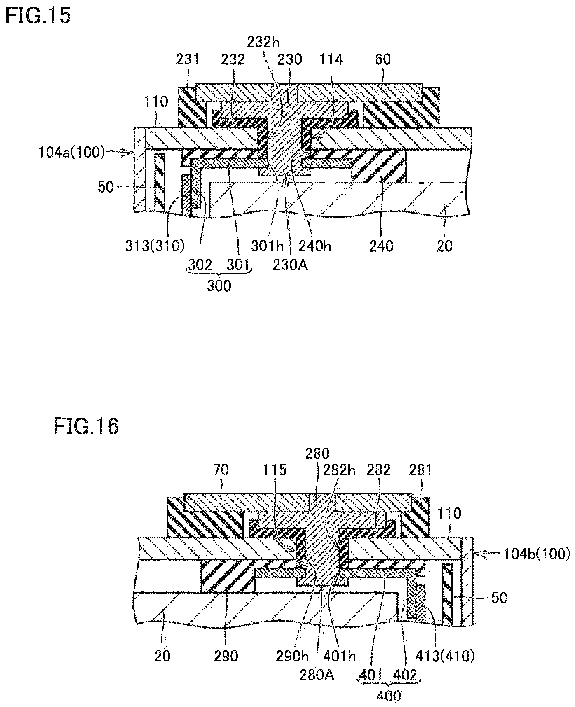

Next, sealing plate 110 will be described. Fig. 13 is an upper perspective view showing configurations of a portion of the current collector and the sealing plate included in the battery according to the first embodiment of the present technology. Fig. 14 is a lower perspective view showing the configurations of the portion of the current collector and the sealing plate included in the battery according to the first embodiment of the present technology. Fig. 15 is an enlarged cross sectional view of an XV portion of the battery shown in Fig. 2. Fig. 16 is an enlarged cross sectional view of an XVI portion of the battery shown in Fig. 2. Fig. 13 shows sealing plate 110 when viewed from the outside of battery 1, and Fig. 14 shows sealing plate 110 when viewed from the inside of battery 1.

As shown in Figs. 13 and 15, sealing plate 110 is provided with a positive electrode terminal attachment hole 114 in the vicinity of one end portion thereof, and is provided with a negative electrode terminal attachment hole 115 in the vicinity of the other end portion thereof.

As shown in Figs. 13 to 15, a first outer side insulating member 231 is disposed around positive electrode terminal attachment hole 114 on the surface of sealing plate 110 opposite to the electrode assembly 20 side, and an inner side insulating member 240 and first positive electrode current collector 300 are disposed around positive electrode terminal attachment hole 114 on the surface of sealing plate 110 on the electrode assembly 20 side.

Positive electrode terminal 230 is inserted from the outside of battery 1 into a through hole 232h of a second outer side insulating member 232, positive electrode terminal attachment hole 114 of sealing plate 110, a through hole 240h of inner side insulating member 240, and a through hole 301h of first positive electrode current collector 300. Positive electrode terminal 230 is swaged onto first positive electrode current collector 300 to form a swaged portion 230A. It should be noted that swaged portion 230A of positive electrode terminal 230 may be welded to first positive electrode current collector 300 after the swaging.

As shown in Figs. 13, 14 and 16, a first outer side insulating member 281 is disposed around negative electrode terminal attachment hole 115 on the surface of sealing plate 110 opposite to the electrode assembly 20 side, and an inner side insulating member 290 and first negative electrode current collector 400 are disposed around negative electrode terminal attachment hole 115 on the surface of sealing plate 110 on the electrode assembly 20 side.

Negative electrode terminal 280 is inserted from the outside of battery 1 into a through hole 282h of a second outer side insulating member 282, negative electrode terminal attachment hole 115 of sealing plate 110, a through hole 290h of inner side insulating member 290, and a through hole 401h of first negative electrode current collector 400. Negative electrode terminal 280 is swaged onto first negative electrode current collector 400 to form a swaged portion 280A. It should be noted that swaged portion 280A of negative electrode terminal 280 may be welded to first negative electrode current collector 400 after the swaging.

It should be noted that a timing at which positive electrode external conductive member 60 is connected to positive electrode terminal 230 or negative electrode external conductive member 70 is connected to negative electrode terminal 280 is not particularly limited. The timing of connecting may be after positive electrode terminal 230 and negative electrode terminal 280 are fixed to sealing plate 110 or may be after electrolyte solution injection hole 111 of sealing plate 110 connected to exterior package 100 is sealed.

As shown in Figs. 13 to 15, first positive electrode current collector 300, which is an extension current collector, has an L-shape when viewed in cross section. First positive electrode current collector 300 includes a base portion 301 and a current collector connection portion 302. Base portion 301 is disposed between electrode assembly 20 and sealing plate 110 along sealing plate 110 with inner side insulating member 240 being interposed between base portion 301 and sealing plate 110.

Current collector connection portion 302 is folded from an end of base portion 301 and extends toward bottom portion 102. Current collector connection portion 302 is connected to third region 313 of second positive electrode current collector 310. Current collector connection portion 302 is disposed between one second side wall 104a of exterior package 100 and electrode assembly 20.

As shown in Figs. 13, 14 and 16, first negative electrode current collector 400, which is an extension current collector, has an L-shape when viewed in cross section. First negative electrode current collector 400 includes a base portion 401 and a current collector connection portion 402. Base portion 401 is disposed between electrode assembly 20 and sealing plate 110 along sealing plate 110 with inner side insulating member 290 being interposed between base portion 401 and sealing plate 110.

Current collector connection portion 402 is folded from an end portion of base portion 401 and extends toward bottom portion 102. Current collector connection portion 402 is connected to third region 413 of second negative electrode current collector 410. Current collector connection portion 402 is disposed between other second side wall 104b of exterior package 100 and electrode assembly 20.

Next, connection between the first current collector and the second current collector will be described. As shown in Fig. 3, three electrode assemblies 20 each having second positive electrode current collector 310 and second negative electrode current collector 410 attached thereon are disposed side by side. On this occasion, in three electrode assemblies 20, positive electrode tab groups 210 are disposed on the same side, and negative electrode tab groups 260 are also disposed on the same side.

Each of second positive electrode current collectors 310 attached to three electrode assemblies 20 with each of positive electrode tab groups 210 of three electrode assemblies 20 being bent is joined to current collector connection portion 302 of first positive electrode current collector 300 fixed to sealing plate 110. Thus, a joined portion between current collector connection portion 302 and third region 313 is formed in recess 314.

Each of second negative electrode current collectors 410 attached to three electrode assemblies 20 with each of negative electrode tab groups 260 of three electrode assemblies 20 being bent is joined to current collector connection portion 402 of first negative electrode current collector 400 fixed to sealing plate 110. Thus, a joined portion between current collector connection portion 402 and third region 413 is formed in recess 414.

As a method of connecting first positive electrode current collector 300 and second positive electrode current collector 310 to each other or of connecting first negative electrode current collector 400 and second negative electrode current collector 410 to each other, ultrasonic welding, resistance welding, laser welding involving irradiation of high energy rays, or the like can be used. In particular, the laser welding is preferably used.

Next, insertion of electrode assemblies 20 into exterior package 100 will be described. As shown in Fig. 2, electrode assemblies 20 are disposed inside insulating sheet 50 that is in the form of a pouch or box. Electrode assemblies 20 covered with insulating sheet 50 are inserted into exterior package 100. Thus, the plurality of wound type electrode assemblies are accommodated in battery case 10. Next, sealing plate 110 is joined by laser welding or the like at opening 101 of exterior package 100.

Thereafter, a non-aqueous electrolyte solution is injected from electrolyte solution injection hole 111 provided in sealing plate 110, and electrolyte solution injection hole 111 is sealed by sealing member 112. Thus, battery 1 is completed. It should be noted that known materials can be used for the materials of positive electrode plate 200, negative electrode plate 250, the separator, the electrolyte solution, and the mechanical components used in battery 1 according to the present embodiment.

Hereinafter, a structure of insulating sheet 50 in the first embodiment of the present technology will be described in detail.

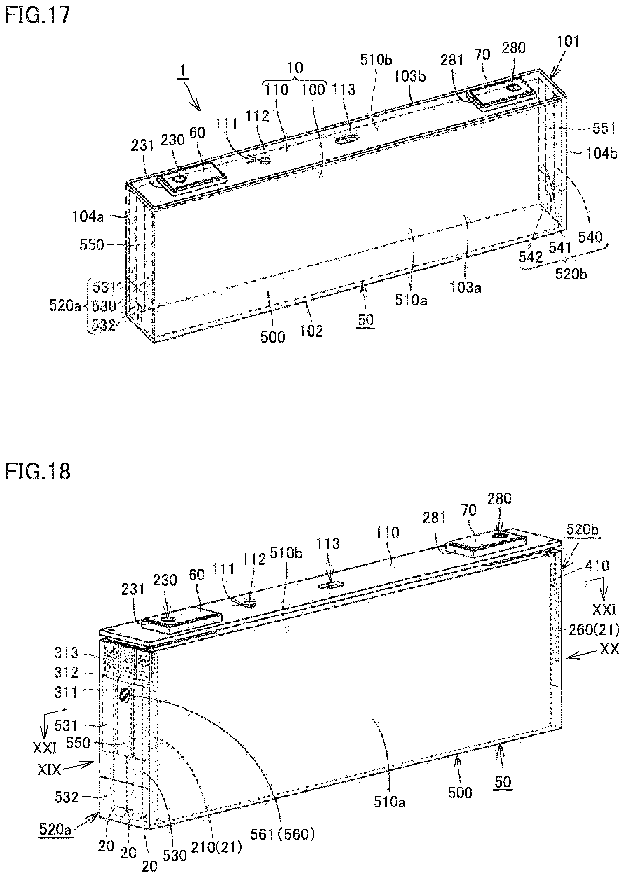

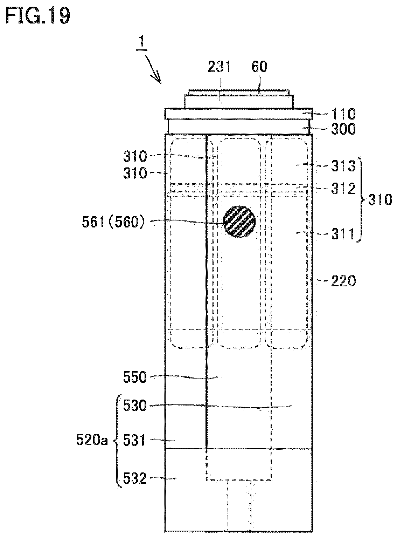

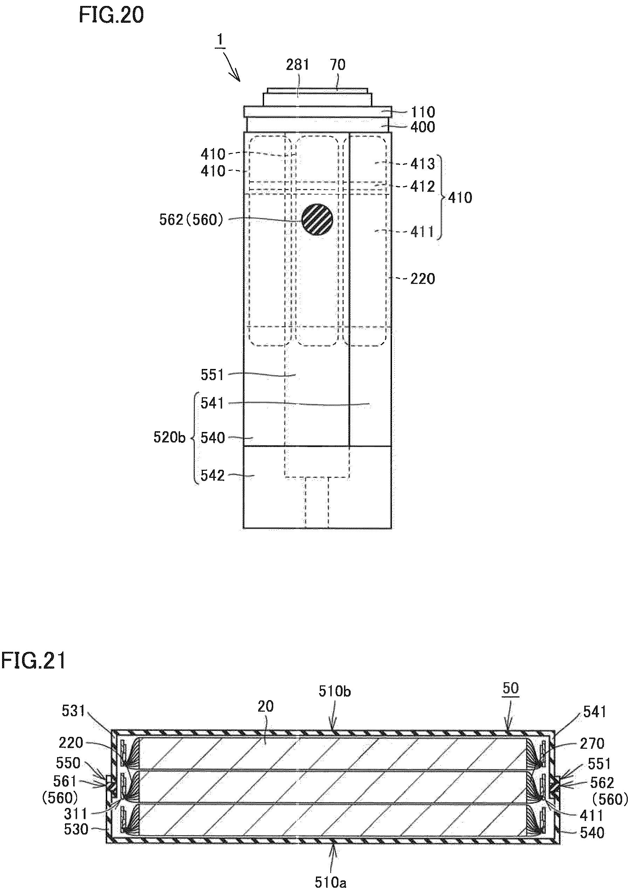

Fig. 17 is a perspective view showing a positional relation between the battery case and the insulating sheet included in the battery according to the first embodiment of the present technology. Fig. 18 is a perspective view showing the configuration of the battery except for the exterior package of the battery according to the first embodiment of the present technology. Fig. 19 is a side view of the battery of Fig. 18 when viewed in a direction of arrow XIX. Fig. 20 is a side view of the battery of Fig. 18 when viewed in a direction of arrow XX. Fig. 21 is a cross sectional view of the battery of Fig. 18 when viewed in a direction of arrowed line XXI-XXI.

As shown in Figs. 17 to 21, insulating sheet 50 according to the first embodiment includes a bottom surface portion 500, a first side surface portion 510a, a second side surface portion 510b, a third side surface portion 520a, and a fourth side surface portion 520b.

As shown in Fig. 17, bottom surface portion 500 is disposed between electrode assembly 20 and bottom portion 102 of exterior package 100. Bottom surface portion 500 faces bottom portion 102 of exterior package 100.

First side surface portion 510a is disposed between one of the pair of first side walls 103a, 103b and electrode assembly 20. First side surface portion 510a in the present embodiment is disposed between one first side wall 103a and electrode assembly 20.

Second side surface portion 510b is disposed between the other of the pair of first side walls 103a, 103b and electrode assembly 20. Second side surface portion 510b in the present embodiment is disposed between other first side wall 103b and electrode assembly 20.

As shown in Figs. 17 to 19, third side surface portion 520a includes a first left-side piece portion 530, a second left-side piece portion 531, and a left-side bottom piece portion 532.

First left-side piece portion 530 is folded from an end portion of one side of first side surface portion 510a. First left-side piece portion 530 in the present embodiment is folded from an end portion of the left side of first side surface portion 510a when viewed in a direction perpendicular to the plane of sheet of Fig. 21.

Second left-side piece portion 531 is folded from an end portion of one side of second side surface portion 510b. Second left-side piece portion 531 in the present embodiment is folded from an end portion of the left side of second side surface portion 510b when viewed in the direction perpendicular to the plane of sheet of Fig. 21.

As shown in Fig. 18, left-side bottom piece portion 532 is folded from an end portion of the left side of bottom surface portion 500.

As shown in Fig. 17, Fig. 20, and Fig. 21, fourth side surface portion 520b is constituted of a first right-side piece portion 540, a second right-side piece portion 541, and a right-side bottom piece portion 542.

First right-side piece portion 540 is folded from an end portion of the other side of first side surface portion 510a. First right-side piece portion 540 in the present embodiment is folded from an end portion of the right side of first side surface portion 510a when viewed in the direction perpendicular to the plane of sheet of Fig. 21.

Second right-side piece portion 541 is folded from an end portion of the other side of second side surface portion 510b. Second right-side piece portion 541 in the present embodiment is folded from an end portion of the right side of second side surface portion 510b when viewed in the direction perpendicular to the plane of sheet of Fig. 21.

As shown in Fig. 17, right-side bottom piece portion 542 is folded from an end portion of the right side of bottom surface portion 500.

As shown in Figs. 17 to 21, insulating sheet 50 has a fold-over portion 550 between battery case 10 and the current collector. Specifically, as shown in Fig. 19, fold-over portion 550 is formed by folding first left-side piece portion 530 and second left-side piece portion 531 on top of each other in third side surface portion 520a. It should be noted that fold-over portion 550 is not limited to the two-fold structure with first left-side piece portion 530 and second left-side piece portion 531, and may have a three-fold structure with first left-side piece portion 530, second left-side piece portion 531, and left-side bottom piece portion 532.

As shown in Figs. 20 and 21, insulating sheet 50 has a fold-over portion 551 formed by folding first right-side piece portion 540 and second right-side piece portion 541 on top of each other in fourth side surface portion 520b. It should be noted that fold-over portion 551 is not limited to the two-fold structure with first right-side piece portion 540 and second right-side piece portion 541, and may be a three-fold structure with first right-side piece portion 540, second right-side piece portion 541, and right-side bottom piece portion 542.

As shown in Figs. 18 to 20, a joined portion 560 at which portions of insulating sheet 50 are joined to each other is formed in fold-over portion 550. Specifically, joined portion 560 is formed at a portion at which first left-side piece portion 530 and second left-side piece portion 531 overlap with each other. In the present embodiment, first joined portion 561 is formed at a portion of fold-over portion 550.

First joined portion 561 is formed at a position at which the current collector and tab portion 21 overlap with each other when viewed in the direction orthogonal to one second side wall 104a. Specifically, first joined portion 561 is formed at a position at which first region 311 of second positive electrode current collector 310 and positive electrode tab group 210 overlap with each other when viewed in the direction orthogonal to one second side wall 104a.

As shown in Figs. 20 and 21, a joined portion 560 is formed at a portion at which first right-side piece portion 540 and second right-side piece portion 541 overlap with each other. Specifically, a second joined portion 562 is joined portion 560 at which overlapping portions of first right-side piece portion 540 and second right-side piece portion 541 are joined to each other in the present embodiment.

Second joined portion 562 is formed at a position at which first region 411 of second negative electrode current collector 410 and negative electrode tab group 260 overlap with each other when viewed in the direction orthogonal to other second side wall 104b.

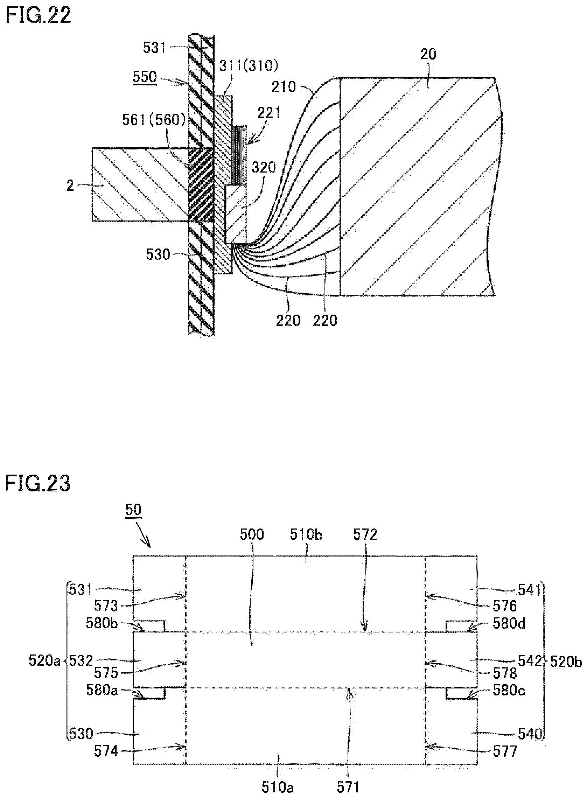

Fig. 22 is a cross sectional view showing a state in which the joined portion is formed at the insulating sheet included in the battery according to the first embodiment of the present technology.

As shown in Fig. 22, first joined portion 561 is joined by welding, for example. First joined portion 561 in the present embodiment is formed by pressing a heater 2 against the portion of fold-over portion 550 overlapping with first region 311 of second positive electrode current collector 310 so as to weld that portion of fold-over portion 550.

The area of first joined portion 561 is preferably more than or equal to 5 mm², is more preferably more than or equal to 10 mm² and less than or equal to 50 mm², and is particularly preferably more than or equal to 15 mm² and less than or equal to 25 mm², when viewed in the direction orthogonal to other second side wall 104b.

Preferably, at least one first joined portion 561 is provided in a region at a distance of more than or equal to 30 mm and less than or equal to 60 mm from the upper end portion of insulating sheet 50 in the direction perpendicular to sealing plate 110. First joined portion 561 is preferably provided substantially at the center of third side surface portion 520a in the thickness direction of battery 1 in which the plurality of electrode assemblies 20 are arranged side by side. Second joined portion 562 preferably also has the same configuration as that of first joined portion 561.

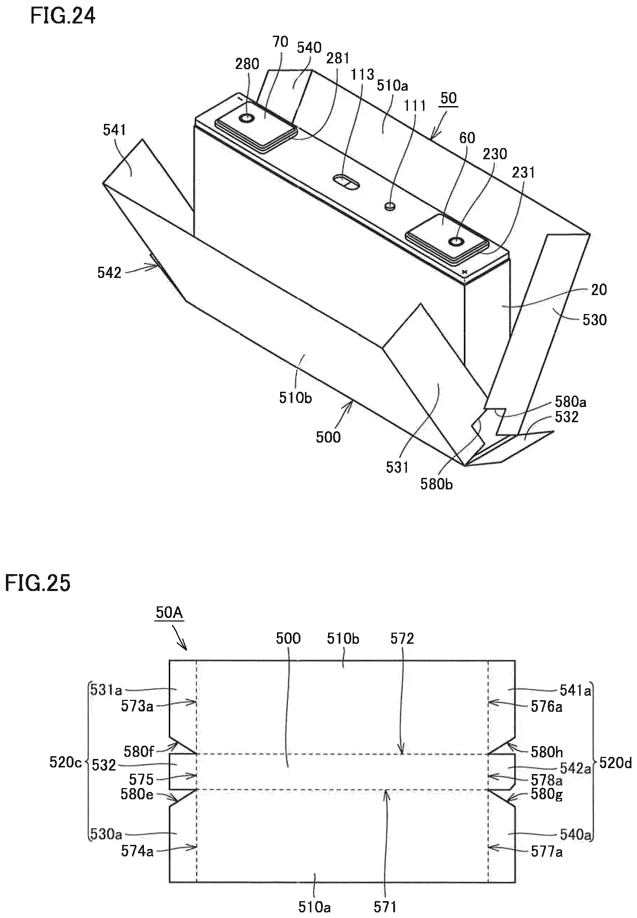

Fig. 23 is an expanded view showing the configuration of the insulating sheet included in the battery according to the first embodiment of the present technology. Fig. 24 is a perspective view showing a state in which the insulating sheet included in the battery according to the first embodiment of the present technology is folded.

As shown in Fig. 23, insulating sheet 50 includes a first folding line 571, a second folding line 572, a third folding line 573, a fourth folding line 574, a fifth folding line 575, a sixth folding line 576, a seventh folding line 577, and an eighth folding line 578.

First folding line 571 is disposed at a boundary between bottom surface portion 500 and first side surface portion 510a. Second folding line 572 is disposed at a boundary between bottom surface portion 500 and second side surface portion 510b. Third folding line 573 is disposed at a boundary between second side surface portion 510b and second left-side piece portion 531. Fourth folding line 574 is disposed at a boundary between first side surface portion 510a and first left-side piece portion 530. Fifth folding line 575 is disposed at a boundary between bottom surface portion 500 and left-side bottom piece portion 532. Sixth folding line 576 is disposed at a boundary between second side surface portion 510b and second right-side piece portion 541. Seventh folding line 577 is disposed at a boundary between first side surface portion 510a and first right-side piece portion 540. Eighth folding line 578 is disposed at a boundary between bottom surface portion 500 and right-side bottom piece portion 542.

Since a cut is provided at a boundary between first left-side piece portion 530 and left-side bottom piece portion 532, first left-side piece portion 530 and left-side bottom piece portion 532 are not continuous to each other. As with the case of first left-side piece portion 530 and left-side bottom piece portion 532, second left-side piece portion 531 and left-side bottom piece portion 532 are not continuous to each other, first right-side piece portion 540 and right-side bottom piece portion 542 are not continuous to each other, and second right-side piece portion 541 and right-side bottom piece portion 542 are not continuous to each other.

First left-side piece portion 530 is provided with a cutout portion 580a, which is adjacent to left-side bottom piece portion 532 and is obtained by cutting out, in the form of a quadrangle, a portion of insulating sheet 50 at the end portion of the one side of insulating sheet 50. Second left-side piece portion 531 is provided with a cutout portion 580b, which is adjacent to left-side bottom piece portion 532 and is obtained by cutting out, in the form of a quadrangle, a portion of insulating sheet 50 at the end portion of the one side of insulating sheet 50. First right-side piece portion 540 is provided with a cutout portion 580c, which is adjacent to right-side bottom piece portion 542 and is obtained by cutting out, in the form of a quadrangle, a portion of insulating sheet 50 at the end portion of the other side of insulating sheet 50. Second right-side piece portion 541 is provided with a cutout portion 580d, which is adjacent to right-side bottom piece portion 542 and is obtained by cutting out, in the form of a quadrangle, a portion of insulating sheet 50 at the end portion of the other side of insulating sheet 50.

As shown in Figs. 23 and 24, insulating sheet 50 covers electrode assemblies 20 by folding bottom surface portion 500, first side surface portion 510a, second side surface portion 510b, first left-side piece portion 530, second left-side piece portion 531, left-side bottom piece portion 532, first right-side piece portion 540, second right-side piece portion 541, and right-side bottom piece portion 542 along first to eighth folding lines 571 to 578. It should be noted that left-side bottom piece portion 532 or right-side bottom piece portion 542 may be folded when inserting insulating sheet 50 and electrode assembly 20 into exterior package 100.

Since cutout portions 580a to 580d are formed to remove corner portions of first left-side piece portion 530, second left-side piece portion 531, first right-side piece portion 540, and second right-side piece portion 541, the corner portions can be suppressed from being folded in when insulating sheet 50 is folded.

In battery 1 according to the present embodiment, when forming joined portion 560 by joining the overlapping portions of insulating sheet 50 to each other in each of fold-over portions 550, 551 with the overlapping portions of insulating sheet 50 being pressed from the outside of insulating sheet 50 against second positive electrode current collector 310 or second negative electrode current collector 410 serving as the current collector connected to tab portion 21, a load can be suppressed from being applied to tab portion 21 and joined portion 560 between tab portion 21 and the current collector because tab portion 21 is folded to provide second positive electrode current collector 310 or second negative electrode current collector 410 with elasticity in the direction in which insulating sheet 50 is pressed. This leads to improved reliability of battery 1.

Further, since the current collector is pressed outward by reaction force for returning folded tab portion 21 to its original shape, a load can be suppressed from being applied to the connection portion between the current collector and the extension current collector even though the current collector is pressed from the outside when forming joined portion 560.

In battery 1 according to the present embodiment, tab portion 21 of electrode assembly 20 is constituted of at least one of positive electrode tab group 210 or negative electrode tab group 260, and a space for disposing tab portion 21 inside battery 1 can be reduced by folding at least one of positive electrode tab group 210 or negative electrode tab group 260, thereby increasing a ratio of occupied volume of electrode assembly 20.

In battery 1 according to the present embodiment, tip portion 221 folded in tab portion 21 faces at least one of the pair of second side walls 104a, 104b each having an area smaller than that of each of the pair of first side walls 103a, 103b, thereby effectively reducing the space for disposing tab portion 21.

In battery 1 according to the present embodiment, since the shortest distance between first region 311 and one second side wall 104a is shorter than the shortest distance between third region 313 and one second side wall 104a in the direction orthogonal to second side walls 104a, 104b, third region 313 can be close to electrode assembly 20 with respect to first region 311, thereby providing an empty space in battery case 10 to accommodate other component(s).

In battery 1 according to the present embodiment, an electric connection path to electrode assembly 20 of battery case 10 can be readily constructed by connecting tab portion 21 to positive electrode terminal 230 or negative electrode terminal 280 using two members, i.e., first positive electrode current collector 300 and second positive electrode current collector 310, or first negative electrode current collector 400 and second negative electrode current collector 410.

In battery 1 according to the present embodiment, electrode assembly 20 is surrounded by first side surface portion 510a, second side surface portion 510b, first left-side piece portion 530, second left-side piece portion 531, first right-side piece portion 540, and second right-side piece portion 541, and electrode assembly 20 can be restrained from the surroundings by the joining of the portions of insulating sheet 50 at joined portion 560, thereby suppressing expansion of electrode assembly 20 by reaction force for returning folded tab portion 21 to its original shape.

In battery 1 according to the present embodiment, since the plurality of wound type electrode assemblies are accommodated inside insulating sheet 50 disposed in battery case 10, the plurality of electrode assemblies 20 can be accommodated in one battery case 10, thereby improving productivity of battery 1 as compared with a case where insulating sheet 50 is disposed for each one of electrode assemblies 20.

### (Second Embodiment)

Hereinafter, a battery according to a second embodiment of the present technology will be described. Since the battery according to the second embodiment of the present technology is different from battery 1 according to the first embodiment of the present technology in terms of the configuration of the insulating sheet, the same configurations as those in battery 1 according to the first embodiment of the present technology will not be described repeatedly.

Fig. 25 is an expanded view showing the configuration of the insulating sheet included in the battery according to the second embodiment of the present technology. As shown in Fig. 25, an insulating sheet 50A included in the battery according to the second embodiment of the present technology includes a bottom surface portion 500, a first side surface portion 510a, a second side surface portion 510b, a third side surface portion 520c, and a fourth side surface portion 520d.

Third side surface portion 520c is constituted of a first left-side piece portion 530a, a second left-side piece portion 531a, and a left-side bottom piece portion 532. Fourth side surface portion 520d is constituted of a first right-side piece portion 540a, a second right-side piece portion 541a, and a right-side bottom piece portion 542a.

Insulating sheet 50A includes a first folding line 571, a second folding line 572, a third folding line 573a, a fourth folding line 574a, a fifth folding line 575, a sixth folding line 576a, a seventh folding line 577a, and an eighth folding line 578a.

First folding line 571 is disposed at a boundary between bottom surface portion 500 and first side surface portion 510a. Second folding line 572 is disposed at a boundary between bottom surface portion 500 and second side surface portion 510b. Third folding line 573a is disposed at a boundary between second side surface portion 510b and second left-side piece portion 531a. Fourth folding line 574a is disposed at a boundary between first side surface portion 510a and first left-side piece portion 530a. Fifth folding line 575 is disposed at a boundary between bottom surface portion 500 and left-side bottom piece portion 532. Sixth folding line 576a is disposed at a boundary between second side surface portion 510b and second right-side piece portion 541a. Seventh folding line 577a is disposed at a boundary between first side surface portion 510a and first right-side piece portion 540a. Eighth folding line 578a is disposed at a boundary between bottom surface portion 500 and right-side bottom piece portion 542a.

In first left-side piece portion 530a, a cutout portion 580e is formed by cutting a portion of first left-side piece portion 530a on the left-side bottom piece portion 532 side in the form of a triangle to expand toward the end portion of the one side of insulating sheet 50A. In second left-side piece portion 531a, a cutout portion 580f is formed by cutting a portion of second left-side piece portion 531a on left-side bottom piece portion 532 side in the form of a triangle to expand toward the end portion of the one side of insulating sheet 50A. In first right-side piece portion 540a, a cutout portion 580g is formed by cutting a portion of first right-side piece portion 540a on the right-side bottom piece portion 542 side in the form of a triangle to expand toward the end portion of the other side of insulating sheet 50A. In second right-side piece portion 541a, a cutout portion 580h is formed by cutting a portion of second right-side piece portion 541a on the right-side bottom piece portion 542 side in the form of a triangle to expand toward the end portion of the other side of insulating sheet 50A.

Insulating sheet 50A covers electrode assemblies 20 by folding bottom surface portion 500, first side surface portion 510a, second side surface portion 510b, first left-side piece portion 530a, second left-side piece portion 531a, left-side bottom piece portion 532, first right-side piece portion 540a, second right-side piece portion 541a, and right-side bottom piece portion 542a along first to eighth folding lines 571 to 578a. Folded first left-side piece portion 530a, second left-side piece portion 531a, and left-side bottom piece portion 532 face one second side wall 104a. Folded first right-side piece portion 540a, second right-side piece portion 541a, and right-side bottom piece portion 542a face other second side wall 104b.

In the battery according to the present embodiment, since cutout portions 580e to 580h each obtained by cutting in the form of a triangle to expand toward the end portion of the one side or the other side of insulating sheet 50A are provided, the corner portions of first left-side piece portion 530a, second left-side piece portion 531a, first right-side piece portion 540a, and second right-side piece portion 541a can be suppressed from being folded in when insulating sheet 50A is folded and shaped.

### (Third Embodiment)

Hereinafter, a battery according to a third embodiment of the present technology will be described. Since a battery 1B according to the third embodiment of the present technology is different from battery 1 according to the first embodiment of the present technology in terms of the configuration of the insulating sheet, the same configurations as those in battery 1 according to the first embodiment of the present technology will not be described repeatedly.

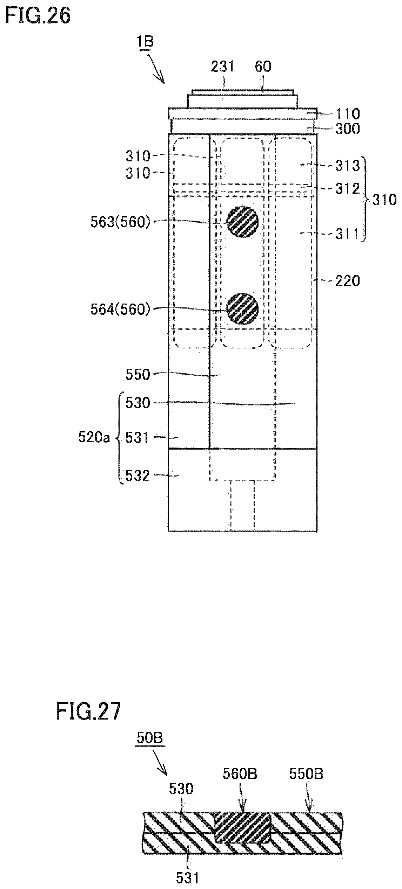

Fig. 26 is a side view showing the configuration of the battery according to the third embodiment of the present technology. In Fig. 26, no exterior package is illustrated.

As shown in Fig. 26, the insulating sheet included in battery 1B according to the present embodiment has a fold-over portion 550 between the battery case and the current collector. Specifically, fold-over portion 550 is formed by folding first left-side piece portion 530 and second left-side piece portion 531 on top of each other in third side surface portion 520a.

In fold-over portion 550, joined portions 560 at each of which portions of insulating sheet 50 are joined to each other are formed. Specifically, when viewed in a direction orthogonal to one second side wall 104a, the plurality of joined portions 560 separated from each other are formed at positions overlapping with first region 311 in fold-over portion 550. In the present embodiment, a third joined portion 563 and a fourth joined portion 564 are formed at portions of fold-over portion 550.

Each of third joined portion 563 and fourth joined portion 564 is formed at a position at which first region 311 of second positive electrode current collector 310 and positive electrode tab group 210 overlap with each other when viewed in the direction orthogonal to one second side wall 104a. It should be noted that the number of joined portions 560 is not limited to two, and three or more joined portions 560 may be provided in fold-over portion 550. Although third joined portion 563 and fourth joined portion 564 in the present embodiment are disposed side by side in the longitudinal direction of the insulating sheet, third joined portion 563 and fourth joined portion 564 may be disposed in parallel in the direction in which electrode assemblies 20 are arranged side by side.

As with the case of third side surface portion 520a, fold-over portion 551 is also formed by folding first right-side piece portion 540 and second right-side piece portion 541 on top of each other in fourth side surface portion 520b. A fifth joined portion and a sixth joined portion separated from each other are formed at positions overlapping with first region 411 in fold-over portion 551.

In battery 1B according to the present embodiment, the plurality of joined portions 560 separated from each other are formed at positions overlapping with each of first regions 311, 411 in fold-over portions 550, 551 when viewed in the direction orthogonal to second side walls 104a, 104b, thereby improving stability in shape of the insulating sheet after the folding. Specifically, when one joined portion 560 is formed in fold-over portion 550 or fold-over portion 551, the insulating sheet may be rotated about joined portion 560; however, by providing the plurality of joined portions 560, the insulating sheet is not rotated, thereby stabilizing the box-like shape of the insulating sheet.

### (Fourth Embodiment)

Hereinafter, a battery according to a fourth embodiment of the present technology will be described. Since the battery according to the fourth embodiment of the present technology is different from battery 1 according to the first embodiment of the present technology in terms of the configuration of the insulating sheet, the same configurations as those in battery 1 according to the first embodiment of the present technology will not be described repeatedly.

Fig. 27 is a cross sectional view showing a joined portion of the insulating sheet included in the battery according to the fourth embodiment of the present technology.

An insulating sheet 50B according to the fourth embodiment includes a third side surface portion 520a and a fourth side surface portion 520b.

A fold-over portion 550B is formed between battery case 10 and the current collector. Specifically, fold-over portion 550B is formed by folding first left-side piece portion 530 and second left-side piece portion 531 on top of each other in third side surface portion 520a.

As shown in Fig. 27, a joined portion 560B at which portions of insulating sheet 50B are joined to each other is formed in fold-over portion 550B. Joined portion 560B is formed to extend through first left-side piece portion 530 in the direction perpendicular to one second side wall 104a and to reach the inside of second left-side piece portion 531.

A fold-over portion is formed by folding first right-side piece portion 540 and second right-side piece portion 541 on top of each other in fourth side surface portion 520b. As with the case of third side surface portion 520a, a joined portion is also formed at a portion of the fold-over portion in fourth side surface portion 520b. The joined portion extends through first right-side piece portion 540 in the direction perpendicular to other second side wall 104b and reaches the inside of second right-side piece portion 541.

In the battery according to the present embodiment, the folded portions of insulating sheet 50B are joined to each other in such a state that joined portion 560B does not extend through the inner one of the folded portions of insulating sheet 50B, thereby reducing a thermal influence of heat over the current collector and electrode assembly 20 at the time of joining.

Hereinafter, batteries according to modifications of the fourth embodiment of the present technology will be described. Since each of the batteries according to the modifications of the fourth embodiment of the present technology is different from the battery according to the fourth embodiment of the present technology in terms of the configuration of the insulating sheet, the same configurations as those in the battery according to the fourth embodiment of the present technology will not be described repeatedly.

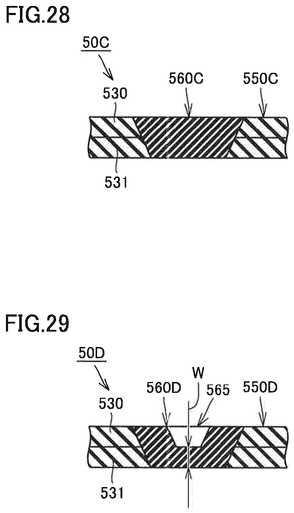

Fig. 28 is a cross sectional view showing a joined portion of the insulating sheet included in a battery according to a first modification of the fourth embodiment of the present technology.

As shown in Fig. 28, a joined portion 560C at which portions of insulating sheet 50C are joined to each other is formed in a fold-over portion 550C. Joined portion 560C extends through both the folded portions of insulating sheet 50C in the direction perpendicular to one second side wall 104a. In joined portion 560C, a joining range of first left-side piece portion 530 is larger than a joining range of second left-side piece portion 531.

As with the case of third side surface portion 520a, a fold-over portion is also formed by folding first right-side piece portion 540 and second right-side piece portion 541 on top of each other in fourth side surface portion 520b. A joined portion is formed at a portion of the fold-over portion. The joined portion extends through both the folded portions of insulating sheet 50C in the direction perpendicular to other second side wall 104b. In the joined portion, a joining range of first right-side piece portion 540 is larger than a joining range of second right-side piece portion 541.

In the battery according to the first modification of the present embodiment, since the joining range of first left-side piece portion 530 disposed on the outer side is larger than the joining range of second left-side piece portion 531 in joined portion 560C, joined portion 560C has a wedge shape, with the result that the folded portions of insulating sheet 50C can be firmly joined to each other.

Fig. 29 is a cross sectional view showing a joined portion of an insulating sheet provided in a battery according to a second modification of the fourth embodiment of the present technology.

As shown in Fig. 29, a joined portion 560D at which portions of insulating sheet 50D are joined to each other is formed in a fold-over portion 550D. Joined portion 560D extends through both the folded portions of insulating sheet 50D in the direction perpendicular to one second side wall 104a. In joined portion 560D, a depression 565 is formed on the first left-side piece portion 530 side. Thickness W of joined portion 560D at its thinnest portion at which depression 565 is formed is larger than the thickness of unfolded insulating sheet 50D.

As with the case of third side surface portion 520a, a fold-over portion is also formed by folding first right-side piece portion 540 and second right-side piece portion 541 on top of each other in fourth side surface portion 520b. A joined portion is formed at a portion of the fold-over portion. In the joined portion, the depression is formed on the first right-side piece portion 540 side in the direction perpendicular to other second side wall 104b. The thickness of the joined portion at its thinnest portion at which the depression is formed is larger than the thickness of unfolded insulating sheet 50D.

In the battery according to the second modification of the present embodiment, since depression 565 is provided at a portion of joined portion 560D provided between the folded portions of insulating sheet 50D, joined portion 560D can be visually confirmed readily before being inserted into exterior package 100.

Although the embodiments of the present invention have been described and illustrated in detail, it is clearly understood that the same is by way of illustration and example only and is not to be taken by way of limitation, the scope of the present invention being interpreted by the terms of the appended claims.

## Claims

1. A battery comprising:
an electrode assembly (20) having a positive electrode plate (200) and a negative electrode plate (250);
a battery case (10) that accommodates the electrode assembly (20);
a tab portion (21) provided on at least one of the positive electrode plate (200) and the negative electrode plate (250), the tab portion (21) extending on a side of the electrode assembly (20);
a current collector (30, 40) connected to the tab portion (21); and
an insulating sheet (50, 50A, 50B, 50C, 50D) disposed between the electrode assembly (20) and the battery case (10), the insulating sheet (50, 50A, 50B, 50C, 50D) having a fold-over portion (550, 550B, 550C, 550D, 551) between the battery case (10) and the current collector (30, 40), wherein
the current collector (30, 40) faces a side surface of the battery case (10) with the tab portion (21) being folded,
a joined portion (560, 560B, 560C, 560D) at which portions of the insulating sheet (50, 50A, 50B, 50C, 50D) are joined to each other is formed in the fold-over portion (550, 550B, 550C, 550D, 551),
a positive electrode tab group (210) including a plurality of positive electrode tabs (220) provided on the positive electrode plate (200) is disposed at an end portion of one side of the electrode assembly (20),
a negative electrode tab group (260) including a plurality of negative electrode tabs provided on the negative electrode plate (250) is disposed at an end portion of the other side of the electrode assembly (20),
the tab portion (21) is constituted of at least one of the positive electrode tab group (210) and the negative electrode tab group (260),
the battery case (10) includes an exterior package (100) composed of a metal and provided with an opening (101), and a sealing plate (110) that seals the opening (101),
the exterior package (100) has a bottom portion (102) facing the opening (101), a pair of first side walls (103a, 103b) provided to extend from edges of the bottom portion (102) and face each other, and a pair of second side walls (104a, 104b) provided to extend from edges of the bottom portion (102) and face each other so as to connect between the first side walls (103a, 103b),
an area of each of the pair of first side walls (103a, 103b) is larger than an area of each of the pair of second side walls (104a, 104b),
a tip portion (221) folded in the tab portion (21) faces at least one of the pair of second side walls (104a, 104b), and
one (104a) of the pair of second side walls (104a, 104b) faces the positive electrode tab group (210), and the other (104b) of the pair of second side walls (104a, 104b) faces the negative electrode tab group (260).

2. The battery according to claim 1, wherein
the current collector (30, 40) has a first region (311, 411) facing a second side wall (104a, 104b), a second region (312, 412) located on the sealing plate (110) side with respect to the first region (311, 411), and a third region (313, 413) located on the sealing plate (110) side with respect to the second region (312, 412) and facing the second side wall (104a, 104b),
the tab portion (21) is connected to the first region (311, 411), and
a shortest distance between the first region (311, 411) of the current collector (30, 40) and the second side wall (104a, 104b) is shorter than a shortest distance between the third region (313, 413) of the current collector (30, 40) and the second side wall (104a, 104b) in a direction orthogonal to the second side wall (104a, 104b), the current collector (30, 40) and the second side wall (104a, 104b) facing each other.

3. The battery according to claim 2, further comprising an extension current collector (300, 400) connected to the current collector (30, 40), wherein
the extension current collector (300, 400) has a base portion (301, 401) and a current collector connection portion (302, 402), the base portion (301, 401) being disposed between the electrode assembly (20) and the sealing plate (110), the current collector connection portion (302, 402) extending from an end of the base portion (301, 401) toward the bottom portion (102), and
the current collector connection portion (302, 402) is connected to the third region (313, 413).

4. The battery according to claim 1, wherein
the insulating sheet (50, 50A, 50B, 50C, 50D) includes
a first side surface portion (510a) disposed between one of the pair of first side walls (103a, 103b) and the electrode assembly (20),
a second side surface portion (510b) disposed between the other of the pair of first side walls (103a, 103b) and the electrode assembly (20),
a first left-side piece portion (530, 530a) folded from an end portion of one side of the first side surface portion (510a),
a first right-side piece portion (540, 540a) folded from an end portion of the other side of the first side surface portion (510a),
a second left-side piece portion (531, 531a) folded from an end portion of one side of the second side surface portion (510b), and
a second right-side piece portion (541, 541a) folded from an end portion of the other side of the second side surface portion (510b),
the joined portion (560, 560B, 560C, 560D) is formed at a portion at which the first left-side piece portion (530, 530a) and the second left-side piece portion (531, 531a) overlap with each other, and
the joined portion (560, 560B, 560C, 560D) is formed at a portion at which the first right-side piece portion (540, 540a) and the second right-side piece portion (541, 541a) overlap with each other.

5. The battery according to any one of claims 1 to 4, wherein
the electrode assembly (20) is a wound type electrode assembly in which the positive electrode plate (200) and the negative electrode plate (250) are wound, and
a plurality of the wound type electrode assemblies are accommodated inside the insulating sheet (50, 50A, 50B, 50C, 50D) disposed in the battery case (10).

6. The battery according to claim 2 or 3, wherein the joined portion (560) is formed at a position at which the current collector (30, 40) and the tab portion (21) overlap with each other when viewed in a direction orthogonal to the second side walls (104a, 104b).

7. The battery according to any one of claims 2, 3 and 6, wherein when viewed in a direction orthogonal to the second side walls (104a, 104b), a plurality of the joined portions (560) separated from each other are formed at positions that overlap with the first region (311, 411) in the fold-over portion (550, 551).

8. The battery according to claim 4, wherein
the current collector (30, 40) includes a positive electrode current collector (30) and a negative electrode current collector (40),
the joined portion (560, 560B, 560C, 560D) includes a first joint portion (561) and a second joint portion (562),
the first joined portion (561) is formed at a position at which the positive electrode current collector (30) and the positive electrode tab group (210) overlap with each other when viewed in the direction orthogonal to one (104a) of the pair of second side walls (104a, 104b), and
the second joined portion (562) is formed at a position at which the negative electrode current collector (40) and the negative electrode tab group (260) overlap with each other when viewed in the direction orthogonal to the other (104b) of the pair of second side walls (104a, 104b).

9. The battery according to claim 4, wherein
the insulating sheet (50) further includes a third side surface portion (520a) disposed between one of the pair of second side walls (104a, 104b), and
the joined portion (560, 561, 562) is provided substantially at the center of the third side surface portion (520a) in a thickness direction of battery (1) in which a plurality of electrode assemblies (20) are arranged side by side.

## Patentansprüche

1. Batterie, aufweisend:
eine Elektrodenanordnung (20) mit einer positiven Elektrodenplatte (200) und einer negativen Elektrodenplatte (250);
ein Batteriegehäuse (10), welches die Elektrodenanordnung (20) aufnimmt;
einen Laschenabschnitt (21), der an der positiven Elektrodenplatte (200) und/oder der negativen Elektrodenplatte (250) bereitgestellt ist, wobei sich der Laschenabschnitt (21) an einer Seite der Elektrodenanordnung (20) erstreckt;
einen Stromkollektor (30, 40), der mit dem Laschenabschnitt (21) verbunden ist; und
eine Isolierfolie (50, 50A, 50B, 50C, 50D), welche zwischen der Elektrodenanordnung (20) und dem Batteriegehäuse (10) angeordnet ist, wobei die Isolierfolie (50, 50A, 50B, 50C, 50D) einen Umschlagabschnitt (550, 550B, 550G, 550D, 551) zwischen dem Batteriegehäuse (10) und dem Stromkollektor (30, 40) aufweist, wobei
der Stromkollektor (30, 40) einer Seitenfläche des Batteriegehäuses (10) zugewandt ist, wobei der Laschenabschnitt (21) gefaltet ist,
ein Verbindungsabschnitt (560, 560B, 560C, 560D), an dem Abschnitte der Isolierfolie (50, 50A, 50B, 50C, 50D) miteinander verbunden sind, bei dem Umschlagabschnitt (550, 550B, 550C, 550D, 551) ausgebildet ist,
eine Gruppe (210) von positiven Elektrodenlaschen mit einer Mehrzahl von positiven Elektrodenlaschen (220), die auf der positiven Elektrodenplatte (200) bereitgestellt sind, an einem Endabschnitt einer Seite der Elektrodenanordnung (20) angeordnet ist,
eine Gruppe (260) von negativen Elektrodenlaschen mit einer Mehrzahl von negativen Elektrodenlaschen, die auf der negativen Elektrodenplatte (250) bereitgestellt sind, an einem Endabschnitt der anderen Seite der Elektrodenanordnung (20) angeordnet ist, der Laschenabschnitt (21) aus der Gruppe (210) von positiven Elektrodenlaschen und/oder der Gruppe (260) von negativen Elektrodenlaschen aufgebaut ist,
das Batteriegehäuse (10) eine Außenverpackung (100) umfasst, die aus einem Metall besteht und mit einer Öffnung (101) versehen ist, sowie eine Dichtungsplatte (110), welche die Öffnung (101) abdichtet,
die Außenverpackung (100) einen Bodenabschnitt (102), welcher der Öffnung (101) zugewandt ist, ein Paar erster Seitenwände (103a, 103b), die so bereitgestellt sind, dass diese sich von Rändern des Bodenabschnitts (102) erstrecken und einander zugewandt sind, und ein Paar zweiter Seitenwände (104a, 104b), die so bereitgestellt sind, dass diese sich von Rändern des Bodenabschnitts (102) erstrecken und einander zugewandt sind, um die ersten Seitenwände (103a, 103b) zu verbinden, aufweist,
eine Fläche von jeder aus dem Paar von ersten Seitenwänden (103a, 103b) größer ist als eine Fläche von jeder aus dem Paar von zweiten Seitenwänden (104a, 104b),
ein bei dem Laschenabschnitt (21) gefalteter Spitzenabschnitt (221) zumindest einer aus dem Paar von zweiten Seitenwänden (104a, 104b) zugewandt ist und
eine Seitenwand (104a) aus dem Paar von zweiten Seitenwänden (104a, 104b) der Gruppe (210) von positiven Elektrodenlaschen zugewandt ist und die andere Seitenwand (104b) aus dem Paar von zweiten Seitenwänden (104a, 104b) der Gruppe (260) von negativen Elektrodenlaschen zugewandt ist.

2. Batterie nach Anspruch 1, wobei
der Stromkollektor (30, 40) einen ersten Bereich (311, 411), der einer zweiten Seitenwand (104a, 104b) zugewandt ist, einen zweiten Bereich (312, 412), der sich mit Bezug auf den ersten Bereich (311, 411) auf der Seite der Dichtungsplatte (110) befindet, und einen dritten Bereich (313, 413), der sich mit Bezug auf den zweiten Bereich (312, 412) auf der Seite der Dichtungsplatte (110) befindet und der zweiten Seitenwand (104a, 104b) zugewandt ist, aufweist,
der Laschenabschnitt (21) mit dem ersten Bereich (311, 411) verbunden ist und
ein kürzester Abstand zwischen dem ersten Bereich (311, 411) des Stromkollektors (30, 40) und der zweiten Seitenwand (104a, 104b) kürzer ist als ein kürzester Abstand zwischen dem dritten Bereich (313, 413) des Stromkollektors (30, 40) und der zweiten Seitenwand (104a, 104b) in einer Richtung orthogonal zu der zweiten Seitenwand (104a, 104b), wobei der Stromkollektor (30, 40) und die zweite Seitenwand (104a, 104b) einander zugewandt sind.

3. Batterie nach Anspruch 2, ferner mit einem mit dem Stromkollektor (30, 40) verbundenen Erstreckungsstromkollektor (300, 400), wobei
der Erstreckungsstromkollektor (300, 400) einen Basisabschnitt (301, 401) und einen Stromkollektor-Verbindungsabschnitt (302, 402) aufweist, wobei der Basisabschnitt (301, 401) zwischen der Elektrodenanordnung (20) und der Dichtungsplatte (110) angeordnet ist, sich der Stromkollektor-Verbindungsabschnitt (302, 402) von einem Ende des Basisabschnitts (301, 401) in Richtung des Bodenabschnitts (102) erstreckt und
der Stromkollektor-Verbindungsabschnitt (302, 402) mit dem dritten Bereich (313, 413) verbunden ist.

4. Batterie nach Anspruch 1, wobei
die Isolierfolie (50, 50A, 50B, 50C, 50D) umfasst
einen ersten Seitenflächenabschnitt (510a), der zwischen einer aus dem Paar von ersten Seitenwänden (103a, 103b) und der Elektrodenanordnung (20) angeordnet ist,
einen zweiten Seitenflächenabschnitt (510b), der zwischen der anderen aus dem Paar von ersten Seitenwänden (103a, 103b) und der Elektrodenanordnung (20) angeordnet ist,
einen ersten linken Teilabschnitt (530, 530a), der von einem Endabschnitt einer Seite des ersten Seitenflächenabschnitts (510a) gefaltet ist,
einen ersten rechten Teilabschnitt (540, 540a), welcher von einem Endabschnitt der anderen Seite des ersten Seitenflächenabschnitts (510a) gefaltet ist,
einen zweiten linken Teilabschnitt (531, 531a), welcher von einem Endabschnitt einer Seite des zweiten Seitenflächenabschnitts (510b) gefaltet ist, und
einen zweiten rechten Teilabschnitt (541, 541a), welcher von einem Endabschnitt der anderen Seite des zweiten Seitenflächenabschnitts (510b) gefaltet ist,
der Verbindungsabschnitt (560, 560B, 560C, 560D) an einem Abschnitt ausgebildet ist, an dem der erste linke Teilabschnitt (530, 530a) und der zweite linke Teilabschnitt (531, 531a) einander überlappen, und
der Verbindungsabschnitt (560, 560B, 560C, 560D) an einem Abschnitt ausgebildet ist, an dem der erste rechte Teilabschnitt (540, 540a) und der zweite rechte Teilabschnitt (541, 541a) einander überlappen.

5. Batterie nach einem der Ansprüche 1 bis 4, wobei
die Elektrodenanordnung (20) eine Elektrodenanordnung vom gewickelten Typ ist, bei welcher die positive Elektrodenplatte (200) und die negative Elektrodenplatte (250) gewickelt sind, und
eine Mehrzahl von Elektrodenanordnungen vom gewickelten Typ innerhalb der Isolierfolie (50, 50A, 50B, 50C, 50D) aufgenommen ist, die in dem Batteriegehäuse (10) angeordnet ist.

6. Batterie nach Anspruch 2 oder 3, wobei der Verbindungsabschnitt (560) an einer Position ausgebildet ist, an welcher der Stromkollektor (30, 40) und der Laschenabschnitt (21) bei Betrachtung in einer Richtung orthogonal zu den zweiten Seitenwänden (104a, 104b) einander überlappen.

7. Batterie nach einem der Ansprüche 2, 3 und 6, wobei bei Betrachtung in einer Richtung orthogonal zu den zweiten Seitenwänden (104a, 104b) eine Mehrzahl von Verbindungsabschnitten (560), welche voneinander getrennt sind, an Positionen ausgebildet sind, die mit dem ersten Bereich (311, 411) in dem Umschlagabschnitt (550, 551) überlappen.

8. Batterie nach Anspruch 4, wobei
der Stromkollektor (30, 40) einen Positivelektroden-Stromkollektor (30) und einen Negativelektroden-Stromkollektor (40) umfasst,
der Verbindungsabschnitt (560, 560B, 560C, 560D) einen ersten Verbindungsabschnitt (561) und einen zweiten Verbindungsabschnitt (562) umfasst,
der erste Verbindungsabschnitt (561) an einer Position ausgebildet ist, an welcher der Positivelektroden-Stromkollektor (30) und die Gruppe (210) von positiven Elektrodenlaschen bei Betrachtung in der Richtung orthogonal zu einer Seitenwand (104a) aus dem Paar von zweiten Seitenwänden (104a, 104b) einander überlappen, und
der zweite Verbindungsabschnitt (562) an einer Position ausgebildet ist, an welcher der Negativelektroden-Stromkollektor (40) und die Gruppe (260) von negativen Elektrodenlaschen bei Betrachtung in der Richtung orthogonal zu der anderen Seitenwand (104b) aus dem Paar von zweiten Seitenwänden (104a, 104b) einander überlappen.

9. Batterie nach Anspruch 4, wobei
die Isolierfolie (50) ferner einen dritten Seitenflächenabschnitt (520a) umfasst, welcher zwischen einer aus dem Paar von zweiten Seitenwänden (104a, 104b) angeordnet ist, und
der Verbindungsabschnitt (560, 561, 562) im Wesentlichen in der Mitte des dritten Seitenflächenabschnitts (520a) in einer Dickenrichtung der Batterie (1) bereitgestellt ist, in der eine Mehrzahl von Elektrodenanordnungen (20) nebeneinander angeordnet ist.

## Revendications

1. Une batterie comprenant :
un ensemble d'électrodes (20) comportant une plaque d'électrode positive (200) et une plaque d'électrode négative (250) ;
un boîtier de batterie (10) qui loge l'ensemble d'électrodes (20) ;
une partie de languette (21) prévue sur au moins l'une parmi la plaque d'électrode positive (200) et la plaque d'électrode négative (250), la partie de languette (21) s'étendant sur un côté de l'ensemble d'électrodes (20) ;
un collecteur de courant (30, 40) connecté à la partie de languette (21) ; et
une feuille isolante (50, 50A, 50B, 50C, 50D) disposée entre l'ensemble d'électrodes (20) et le boîtier de batterie (10), la feuille isolante (50, 50A, 50B, 50C, 50D) comportant une partie repliable (550, 550B, 550C, 550D, 551) entre le boîtier de batterie (10) et le collecteur de courant (30, 40), dans laquelle
le collecteur de courant (30, 40) fait face à une surface latérale du boîtier de batterie (10) avec la partie de languette (21) repliée,
une partie jointe (560, 560B, 560C, 560D) au niveau de laquelle des parties de la feuille isolante (50, 50A, 50B, 50C, 50D) sont jointes les unes aux autres est formée dans la partie repliée (550, 550B, 550C, 550D, 551),
un groupe de languettes d'électrode positive (210) comprenant une pluralité de languettes d'électrode positive (220) prévues sur la plaque d'électrode positive (200) est disposé à une partie d'extrémité d'un côté de l'ensemble d'électrodes (20),
un groupe de languettes d'électrode négative (260) comprenant une pluralité de languettes d'électrode négative prévues sur la plaque d'électrode négative (250) est disposé à une partie d'extrémité de l'autre côté de l'ensemble d'électrodes (20),
la partie de languette (21) est constituée d'au moins un élément parmi le groupe de languettes d'électrode positive (210) et le groupe de languettes d'électrode négative (260),
le boîtier de batterie (10) comprend un emballage extérieur (100) composé d'un métal et muni d'une ouverture (101), et une plaque d'étanchéité (110) qui scelle l'ouverture (101),
l'emballage extérieur (100) comporte une partie inférieure (102) faisant face à l'ouverture (101), une paire de premières parois latérales (103a, 103b) prévues pour s'étendre à partir des bords de la partie inférieure (102) et se faire face, et une paire de secondes parois latérales (104a, 104b) prévues pour s'étendre à partir des bords de la partie inférieure (102) et se faire face de manière à relier les premières parois latérales (103a, 103b),
une surface de chacune des deux premières parois latérales (103a, 103b) est plus grande qu'une surface de chacune des deux secondes parois latérales (104a, 104b),
une partie d'extrémité (221) pliée dans la partie de languette (21) fait face à au moins l'une des deux secondes parois latérales (104a, 104b), et
l'une (104a) de la paire de secondes parois latérales (104a, 104b) fait face au groupe de languettes d'électrode positive (210), et l'autre (104b) de la paire de secondes parois latérales (104a, 104b) fait face au groupe de languettes d'électrode négative (260).

2. La batterie selon la revendication 1, dans laquelle
le collecteur de courant (30, 40) comporte une première région (311, 411) faisant face à une seconde paroi latérale (104a, 104b), une deuxième région (312, 412) située du côté de la plaque d'étanchéité (110) par rapport à la première région (311, 411), et une troisième région (313, 413) située du côté de la plaque d'étanchéité (110) par rapport à la deuxième région (312, 412) et faisant face à la seconde paroi latérale (104a, 104b),
la partie de languette (21) est connectée à la première région (311, 411), et
la distance la plus courte entre la première région (311, 411) du collecteur de courant (30, 40) et la seconde paroi latérale (104a, 104b) est plus courte que la distance la plus courte entre la troisième région (313, 413) du collecteur de courant (30, 40) et la seconde paroi latérale (104a, 104b) dans une direction orthogonale à la seconde paroi latérale (104a, 104b), le collecteur de courant (30, 40) et la seconde paroi latérale (104a, 104b) se faisant face.

3. La batterie selon la revendication 2, comprenant en outre un collecteur de courant d'extension (300, 400) connecté au collecteur de courant (30, 40), dans laquelle
le collecteur de courant d'extension (300, 400) comporte une partie de base (301, 401) et une partie de connexion de collecteur de courant (302, 402), la partie de base (301, 401) étant disposée entre l'ensemble d'électrodes (20) et la plaque d'étanchéité (110), la partie de connexion du collecteur de courant (302, 402) s'étendant depuis une extrémité de la partie de base (301, 401) vers la partie inférieure (102), et
la partie de connexion du collecteur de courant (302, 402) étant connectée à la troisième région (313, 413).

4. La batterie selon la revendication 1, dans laquelle
la feuille isolante (50, 50A, 50B, 50C, 50D) comprend
une première partie de surface latérale (510a) disposée entre l'une des deux premières parois latérales (103a, 103b) et l'ensemble d'électrodes (20),
une deuxième partie de surface latérale (510b) disposée entre l'autre des deux premières parois latérales (103a, 103b) et l'ensemble d'électrodes (20),
une première partie de pièce gauche (530, 530a) pliée à partir d'une partie d'extrémité d'un côté de la première partie de surface latérale (510a),
une première partie de pièce droite (540, 540a) pliée à partir d'une partie d'extrémité de l'autre côté de la première partie de surface latérale (510a),
une deuxième partie de pièce gauche (531, 531a) pliée à partir d'une partie d'extrémité d'un côté de la deuxième partie de surface latérale (510b), et
une deuxième partie de pièce droite (541, 541a) pliée à partir d'une partie d'extrémité de l'autre côté de la deuxième partie de surface latérale (510b),
la partie jointe (560, 560B, 560C, 560D) est formée au niveau d'une partie où la première partie de pièce gauche (530, 530a) et la deuxième partie de pièce gauche (531, 531a) se chevauchent, et
la partie jointe (560, 560B, 560C, 560D) est formée au niveau d'une partie où la première partie de pièce droite (540, 540a) et la deuxième partie de pièce droite (541, 541a) se chevauchent.

5. La batterie selon l'une des revendications 1 à 4, dans laquelle
l'ensemble d'électrodes (20) est un ensemble d'électrodes de type enroulé dans lequel la plaque d'électrode positive (200) et la plaque d'électrode négative (250) sont enroulées, et
une pluralité d'ensembles d'électrodes de type enroulé sont logés à l'intérieur de la feuille isolante (50, 50A, 50B, 50C, 50D) disposée dans le boîtier de batterie (10).

6. La batterie selon la revendication 2 ou 3, dans laquelle la partie jointe (560) est formée à une position où le collecteur de courant (30, 40) et la partie de languette (21) se chevauchent l'un l'autre lorsqu'on les observe dans une direction orthogonale aux secondes parois latérales (104a, 104b).

7. La batterie selon l'une des revendications 2, 3 et 6, dans laquelle, lorsqu'on la regarde dans une direction orthogonale aux secondes parois latérales (104a, 104b), une pluralité de parties jointes (560) séparées les unes des autres sont formées à des positions qui chevauchent la première région (311, 411) dans la partie repliée (550, 551).

8. La batterie selon la revendication 4, dans laquelle
le collecteur de courant (30, 40) comprend un collecteur de courant d'électrode positive (30) et un collecteur de courant d'électrode négative (40),
la partie jointe (560, 560B, 560C, 560D) comprend une première partie jointe (561) et une deuxième partie jointe (562),
la première partie jointe (561) est formée à une position à laquelle le collecteur de courant d'électrode positive (30) et le groupe de languettes d'électrode positive (210) se chevauchent l'un l'autre lorsqu'on les regarde dans la direction orthogonale à l'une (104a) de la paire de secondes parois latérales (104a, 104b), et
la deuxième partie de jonction (562) est formée à une position où le collecteur de courant d'électrode négative (40) et le groupe de languettes d'électrode négative (260) se chevauchent lorsqu'on les observe dans la direction orthogonale à l'autre (104b) de la paire de secondes parois latérales (104a, 104b).

9. La batterie selon la revendication 4, dans laquelle
la feuille isolante (50) comprend en outre une troisième partie de surface latérale (520a) disposée entre l'une des deux parois latérales secondaires (104a, 104b), et
la partie jointe (560, 561, 562) est prévue sensiblement au centre de la troisième partie de surface latérale (520a) dans une direction d'épaisseur de la batterie (1) dans laquelle une pluralité d'ensembles d'électrodes (20) sont disposés côte à côte.
